# EUROPEAN PATENT SPECIFICATION

(11) **EP 4 647 923 B1**
(45) Date of publication and mention of the grant of the patent: **16.09.2026**
(21) Application number: 25153810.4
(22) Date of filing: 24.01.2025
(51) Int. Cl.: G06F 12/0846, G06N 3/044, G06N 3/045, G06N 3/063, G06N 3/084

(54) **TRANSFORMER ACCELERATION DEVICE**
TRANSFORMATORBESCHLEUNIGUNGSEINRICHTUNG
DISPOSITIF D'ACCÉLÉRATION DE TRANSFORMATEUR

(30) Priority: 07.05.2024 KR 20240060016
(43) Date of publication of application: 12.11.2025
(73) Proprietor: Samsung Electronics Co., Ltd., Suwon-si, Gyeonggi-do 16677 (KR); Naver Corporation, Seongnam-si, Gyeonggi-do 13561 (KR)
(72) Inventor: LEE, Hwang, Suwon-si (KR); KIM, Chansoo, Suwon-si (KR); JANG, Jae Hun, Suwon-si (KR); JEON, Younho, Suwon-si (KR); HEO, Wan, Suwon-si (KR); KWON, Se Jung, 13529 Seongnam-si (KR); KIM, Byeoung Wook, 13529 Seongnam-si (KR); PARK, Baeseong, 13529 Seongnam-si (KR); LEE, Dongsoo, 13529 Seongnam-si (KR)
(74) Representative: Marks & Clerk LLP

(56) References cited:
- US-A1- 2011 161 703
- US-A1- 2021 241 082

## Description

### BACKGROUND

### (a) Field of the Invention

The present disclosure relates to transformer acceleration devices that execute a transformer generating an output token based on a plurality of input tokens. More particularly, the present disclosure relates to transformer acceleration devices including a memory striding circuit configured to continuously read key-value vectors cached for executing the transformer.

### (b) Description of the Related Art

A transformer acceleration device may generate an output token based on a plurality of input tokens. For example, the transformer acceleration device executes a transformer based on the plurality of input tokens to generate a first output token which is appropriate (e.g. predicted or likely) to following the plurality of input tokens.

The transformer may operate in an auto-regression scheme. For example, the transformer further uses the first output token with the plurality of input tokens to generate a second output token appropriate (e.g. predicted or likely) to following the plurality of input tokens and the first output token. That is, the transformer may sequentially operate throughout a plurality of iterations, and a token generated by each iteration may be used as an input of a subsequent iteration.

The transformer may reuse key-value vectors generated throughout the plurality of iterations. For example, the transformer may reuse a key-value vector computed in a previous iteration in a subsequent iteration. However, when a scheme in which the transformer stores and reads the key-value vectors is not optimized, operation efficiency of the transformer acceleration device may be reduced due to the storing and reading of the key-value vectors.

### SUMMARY

The present disclosure provides transformer acceleration devices including a memory striding circuit implemented to read a key-value vector by an optimization scheme
According to some example embodiments, a transformer acceleration device of the present disclosure may include a memory device including a first memory block configured to store a first plurality of cache vectors for a first plurality of tokens, and a second memory block configured to store a second plurality of cache vectors for a second plurality of tokens; and a memory striding circuit configured to access the first and second memory blocks in response to a first striding request provided from an external device. The memory striding circuit may include a memory block address management circuit configured to store a first memory block base address for the first memory block and store a second memory block base address for the second memory block; a target address generation circuit configured to calculate, in response to the first striding request, a first target address included in the first memory block based on the first memory block base address and a first subblock offset and calculate, in response to the first striding request, a second target address included in the second memory block based on the second memory block base address and the first subblock offset; and a command issue circuit configured to issue a first plurality of memory access commands for a first target subblock located in the first target address, and issue a second plurality of memory access commands for a second target subblock located in the second target address.

Some example embodiments may provide a transformer acceleration device configured to execute a plurality of decoder layers including multi head attention calculations respectively performed based on a plurality of heads. The transformer acceleration device may include a first memory block including a first subblock configured to store a first plurality of cache vectors generated for a first plurality of tokens based on a first head and a first decoder layer, the first head being one of the plurality of heads and the first decoder layer being one of the plurality of decoder layers; a second memory block including a second subblock configured to store a second plurality of cache vectors generated for a second plurality of tokens based on the first head and the first decoder layer; a memory striding circuit configured to read the first plurality of cache vectors and the second plurality of cache vectors based on sequentially accessing the first subblock and the second subblock in response to a first striding request provided from an outside (e.g. an outside device or an external device); and a calculation circuit configured to perform a first attention calculation for the first head and the first decoder layer based on the first plurality of cache vectors and the second plurality of cache vectors.

Some example embodiments may provide a transformer acceleration device including a memory device including a plurality of memory blocks including a plurality of subblocks; a memory striding circuit configured to sequentially access the plurality of subblocks in response to a first striding request provided from an external device; and a calculation circuit configured to perform a first attention calculation based on a first plurality of subblocks accessed by the memory striding circuit during a first time period, and perform a second attention calculation based on a second plurality of subblocks accessed by the memory striding circuit during a second time period after the first time period, the plurality of subblocks include the first plurality of subblocks and the second plurality of subblocks.

At least some of the above and other features of the invention are set out in the claims.

### BRIEF DESCRIPTION OF THE DRAWINGS

FIG 1 is a block diagram illustrating a transformer acceleration device according to some example embodiments of the present disclosure.
FIG 2 is a block diagram more specifically illustrating the transformer acceleration device of FIG 1.
FIG 3 is a block diagram illustrating an operation of the transformer of FIG 1.
FIG 4 is a block diagram illustrating a configuration of the transformer of FIG 3 according to some example embodiments.
FIG 5 is a diagram more specifically illustrating the configuration of the decoder layer of FIG 4.
FIG 6 is a diagram more specifically illustrating the linear calculation of FIG 5.
FIGS. 7 and 8 are diagrams more specifically illustrating the multi head attention calculation of FIG. 5.
FIG 9 is a diagram more specifically illustrating the attention score calculation of FIG 7.
FIG 10 is a diagram more specifically illustrating the attention vector calculation of FIG 7.
FIG 11 is a diagram more specifically illustrating the operation of the transformer of FIG 3.
FIG 12 is a block diagram more specifically illustrating the operation of the memory striding circuit according to some example embodiments of the present disclosure.
FIG 13 is a block diagram more specifically illustrating the memory striding circuit of FIG 2.
FIG 14 is a diagram illustrating a memory block base address table of FIG 13.
FIG 15 is a diagram more specifically illustrating a memory block of FIG 12.
FIG 16 is a diagram more specifically illustrating a configuration of a subblock illustrated in FIG 15.
FIGS. 17 and 18 are diagrams more specifically illustrating a subblock group of FIG 15.
FIG 19 is a diagram illustrating an operation of a memory striding circuit according to some example embodiments.
FIG 20 is a diagram more specifically illustrating the operation of the memory striding circuit of FIG 19.
FIG 21 is a flowchart illustrating the operation of the memory striding circuit of FIG 19.
FIG 22 is a flowchart more specifically illustrating operation S120 of FIG 21.
FIG 23 is a diagram illustrating an operation of a memory striding circuit according to some example embodiments.
FIG 24 is a diagram more specifically illustrating the operation of the memory striding circuit of FIG 20.
FIG 25 is a flowchart illustrating the operation of the memory striding circuit of FIG 24.
FIG 26 is a flowchart more specifically illustrating operation S220 of FIG 25.
FIG 27 is a diagram illustrating an operation of a memory striding circuit according to some example embodiments.
FIG 28 is a diagram more specifically illustrating the operation of the memory striding circuit of FIG 27.
FIG 29 is a flowchart illustrating the operation of the memory striding circuit of FIG 27.
FIG 30 is a flowchart more specifically illustrating operation S320 of FIG 29.

### DETAILED DESCRIPTION

Hereinafter, embodiments of the present disclosure will be clearly and specifically described so that those skilled in the art of the present disclosure may easily implement the present disclosure. Details, such as detailed configurations and structures, are simply provided to help the overall understanding of the example embodiments of the present disclosure. Therefore, the transformations of the example embodiments described in the text may be performed by those skilled in the art without departing from the scope of the present disclosure. Moreover, descriptions of well-known functions and structures are omitted for clarity and simplicity. The compositions in the following drawings or detailed description may be shown in the drawings or are connected to those other than the components described in the detailed description. The terms used in the text are the terms defined in consideration of the functions of the present disclosure and are not limited to specific functions. The definition of the terms may be determined based on the details described in the detailed description.

Components described with reference to the terms such as a driver or a block used in the detailed description may be implemented in the form of software, hardware, or combinations thereof. For example, software may be machine code, firmware, embedded code, and application software. For example, hardware may include an electrical circuit, an electronic circuit, a processor, a computer, integrated circuit cores, a pressure sensor, an inertia sensor, a micro electro mechanical system (MEMS), a passive element, or a combination thereof.

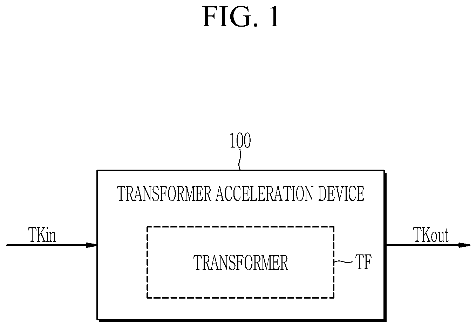

FIG 1 is a block diagram illustrating a transformer acceleration device according to some example embodiments of the present disclosure. Referring to FIG 1, the transformer acceleration device 100 may receive one or more input tokens TKin, and output an output token TKout. For example, the transformer acceleration device 100 may execute a transformer TF. The transformer TF may be an artificial neural network. A transformer be a neural network that makes use of attention mechanisms to process an input set of tokens. The transformer TF may generate the output token TKout appropriate to following the one or more input tokens TKin based on the one or more input tokens TKin.

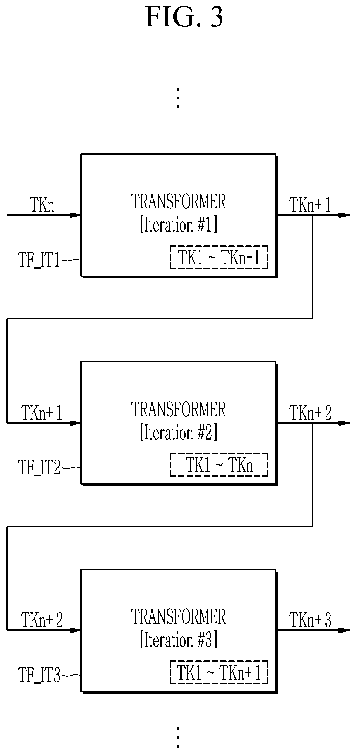

The transformer TF may operate in an auto-regression scheme. For example, the transformer TF may generate a token appropriate (e.g. predicted or likely) to follow the output token TKout further based on the generated output token TKout. By such a scheme, the transformer TF may generate one output token TKout whenever the transformer TF performs one iteration (e.g., one operation cycle). By such a scheme, the transformer TF sequentially performs a plurality of iterations to sequentially generate the plurality of output tokens TKout. A specific operation scheme of the transformer TF will be described in more detail with reference to FIG 3 below.

In some example embodiments, the transformer acceleration device 100 may be used for implementing a natural language processing module, such as a language model (e.g. a large language model (LLM)). For example, the transformer acceleration device 100 may predict an output token TKout that is to follow a plurality of input tokens TKin based on the plurality of input tokens TKin. The output token TKout may be a token that is deemed to be most likely (e.g. that is deemed to be appropriate) to follow the plurality of input tokens TKin. However, the scope of the present disclosure is not limited to the type of specific model in which the transformer acceleration device 100 is used. For example, the transformer acceleration device 100 may be able to be used for implementing any type of artificial intelligence model such as an image generation model, a translation model, an agent control (e.g. reinforcement learning) model, etc. For instance, for an image generation model, the input tokens may represent image data (e.g. may be embeddings of sections or patches of image data) and the output tokens may be predicted tokens representing image data (e.g. may be embeddings of predicted sections or patches of image data). The image generation model may generate later images in a sequence (e.g. video data), and/or may complete or expand an in input image. The output tokens may be decoded to produce one or more predicted images. In a translation model, input tokens representing a language sequence in one language may be translated into output tokens representing the language sequence in another language. In an agent control model, the transformer may be configured to provide data for use in controlling an agent (e.g. a robot, or any other form of electro-mechanical device, or more generally, a real-world agent operating in a real-world environment). For instance, one or more input tokens may represent state data (e.g. one or more preceding states) and/or action data (e.g. one or more preceding actions, and/or one or more future proposed actions), and the output token(s) may represent one or more predicted actions, one or more predicted future states, and/or one or more predicted rewards. For instance, the transformer may be configured to process one or more input tokens representing one or both of preceding state data and preceding action data, and output one or more output tokens representing one or more predicted actions, one or more predicted future states and/or one or more predicted rewards. In addition or alternatively, the transformer may be configured to process one or more input tokens representing one or more predicted actions and output one or more output tokens representing one or more predicted future states. In addition or alternatively, the transformer may be configured to process one or more input tokens representing one or more predicted actions and/or one or more predicted future states and output one or more output tokens representing one or more predicted rewards. Nevertheless, hereinafter, for simpler description, some example embodiments in which the transformer acceleration device 100 is used for implementing the LLM will be representatively described.

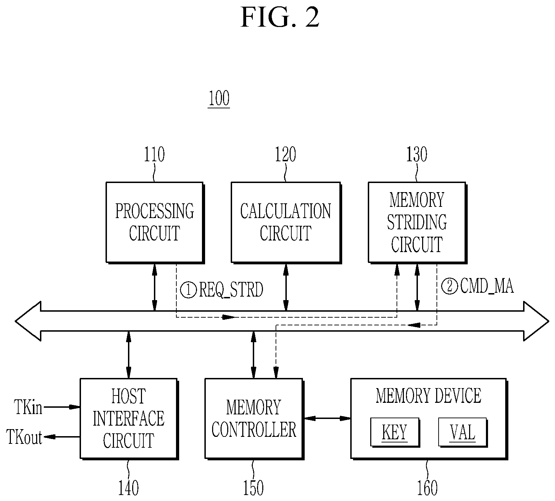

FIG 2 is a block diagram more specifically illustrating the transformer acceleration device of FIG 1. Referring to FIGS. 1 and 2, the transformer acceleration device 100 may include a processing circuit 110, a calculation circuit 120, a memory striding circuit 130, a host interface circuit 140, a memory controller 150, and a memory device 160. The processing circuit 110, the calculation circuit 120, the memory striding circuit 130, the host interface circuit 140, and the memory controller 150 may communicate with each other through a bus.

The processing circuit 110 may control all operations of the transformer acceleration device 100. The processing circuit 110 may schedule a task or a calculation required for driving the transformer TF. That is, the processing circuit 110 may allocate the task or the calculation required for driving the transformer TF to the calculation circuit 120, the memory striding circuit 130, and the memory controller 150. For example, in order to allocate the task to the memory striding circuit 130, the processing circuit 110 may transmit a striding request REQ_STRD to the memory striding circuit 130.

The calculation circuit 120 may perform various types of calculations such as a linear calculation, an attention calculation, etc. For example, the calculation circuit 120 may include dedicated hardware optimized for the linear calculation and/or the attention calculation.

In some example embodiments, the calculation circuit 120 may include one or more processing cores included in various types of processing units including a graphic processing unit (GPU), a central processing unit (CPU), etc. That is, the scope of the present disclosure is not limited to a specific implementation scheme of the calculation circuit 120.

For simpler description, in FIG 2, it is illustrated that the processing circuit 110 is a separate component from the calculation circuit 120, but the scope of the present disclosure is not limited thereto. For example, the processing circuit 110 and the calculation circuit 120 may be configured by separate hardware, or also implemented by one hardware.

The memory striding circuit 130 may iteratively access the memory device 160 in response to the control of the processing circuit 110. For example, in response to the striding request REQ_STRD, the memory striding circuit 130 may sequentially access data stored in mutually separated addresses of the memory device 160. That is, in response to the striding request REQ_STRD, the memory striding circuit 130 may sequentially issue a plurality of memory access commands CMD_MA to the memory device 160 through the memory controller 150. A configuration and an operation of the memory striding circuit 130 will be described in more detail with reference to the following drawings.

In some example embodiments, each of the plurality of memory access commands CMD_MA may be a read command, an activate command, and/or combination thereof.

In some example embodiments, in response to the striding request REQ_STRD, the memory striding circuit 130 may be implemented as an intellectual property (IP) circuit configured to sequentially access the mutually separated addresses of the memory device 160. In this context, an intellectual property (IP) circuit may be a functional block of circuitry (e.g. a circuit having a predefined functionality). However, the scope of the present disclosure is not limited to a specific implementation scheme of the memory striding circuit 130.

The host interface circuit 140 may support interfacing with an external host device (e.g., a central processing unit) of the transformer acceleration device 100. For example, the host interface circuit 140 may receive the input token TKin from the host device, and output the output token TKout to the host device.

In some example embodiments, the host interface circuit 140 may communicate with the host device based on various types of communication interfaces including a peripheral component interconnect express (PCIe), a double data rate (DDR), etc. However, the scope of the present disclosure is not limited to a specific operation scheme of the host interface circuit 140.

The memory controller 150 may control the memory device 160 in response to request of the processing circuit 110, the calculation circuit 120, and the memory striding circuit 130. For example, the memory controller 150 may store data in the memory device 160 or read the data stored in the memory device 160.

The memory device 160 may be used as an operation memory of the transformer acceleration device 100. For example, the memory device 160 may store data which are reused by the transformer TF throughout the plurality of iterations. More specifically, in some example embodiments, the memory device 160 may cache (e.g., store) a plurality of key vectors KEY and a plurality of value vectors VAL to be reused by the calculation circuit 120 throughout the plurality of iterations of the transformer TF. In this case, while subsequent iterations are performed, the calculation circuit 120 may not calculate the plurality of key vectors KEY and the plurality of value vectors VAL stored in the memory device 160, and as a result, an operation speed of the transformer acceleration device 100 may be enhanced.

Hereinafter, for simpler description, the key vector KEY, the value vector VAL, and any combination thereof which are stored in the memory device 160 may be referred to as "key-value vector", "key-value cache", "cache vector", or "key-value cache vector". That is, "key-value vector", "key-value cache", "cache vector, and "key-value cache vector" may refer to one or more key vectors KEY, or refer to one or more value vectors VAL, or refer to a pair of one or more key vectors KEY and value vectors VAL (e.g. one or more pairs of key and value vectors (e.g. one or more key-value pairs)). However, the scope of the present disclosure is not limited to the term.

In some example embodiments, the memory device 160 may pre-store (or, alternatively, generate or receive) the plurality of key vectors KEY and the plurality of value vectors VAL to be reused throughout the plurality of iterations in a training stage of the transformer TF.

In some example embodiments, the memory device 160 may pre-store (or, alternatively, generate or receive) the plurality of key vectors KEY and the plurality of value vectors VAL to be reused in following iterations while the transformer TF performs each iteration.

In some example embodiments, the memory device 160 may further store a weight matrix to be iteratively reused in decoder layers included in the transformer TF.

In some example embodiments, the memory device 160 may be a dynamic random access memory (DRAM) device. However, the scope of the present disclosure is not limited to a specific type of the memory device 160.

In some example embodiments, the memory device 160 may include a plurality of memory blocks corresponding to different addresses from each other. The plurality of key vectors KEY and the plurality value vectors VAL may be stored in different ones of the plurality of memory blocks.

In some example embodiments, the memory striding circuit 130 may sequentially access the plurality of memory blocks in response to one striding request REQ_STRD. That is, in response to one striding request REQ_STRD, the memory striding circuit 130 may sequentially issue the plurality of memory access commands CMD_MA for the plurality of memory blocks having different addresses. In this case, even though the processing circuit 110 does not directly issue the plurality of memory access commands CMD_MA for different addresses, the data stored in the plurality of memory blocks may be able to be sequentially read. Accordingly, a processing load of the processing circuit 110 may be minimized or reduced.

For simpler description, in FIG 2, some example embodiments that the striding request REQ_STRD is issued from the processing circuit 110 are representatively illustrated, but the scope of the present disclosure is not limited thereto. For example, the striding request REQ_STRD may be issued from the external host device of the transformer acceleration device 100. In this case, the striding request REQ_STRD may be delivered to the memory striding circuit 130 through the processing circuit 110, or directly delivered to the memory striding circuit 130 from the host interface circuit 140 unlike the case illustrated FIG 2.

FIG 3 is a block diagram illustrating an operation of the transformer of FIG 1. Referring to FIGS. 1 to 3, the transformer TF may sequentially operate throughout the plurality of iterations. Hereinafter, operations of transformers performing first to third iterations TF_IT1 to TF_IT3 will be representatively described. The first to third iterations may be mutually consecutive.

Hereinafter, for simpler description, it is assumed that an n-th token TKn is generated by a summarization stage of the transformer TF, and it is assumed that the first to third iterations are included in a generation stage. For example, hereinafter, it is assumed that a token stream including first to (n-1)-th tokens TK1 to TKn-1 is provided from the outside (e.g., from an external device) of the transformer acceleration device 100 (e.g., as prompt tokens), and a 0-th iteration preceding the first iteration generates the n-th token TKn based the token stream. However, the scope of the present disclosure is not limited thereto.

The transformer TF may perform the plurality of iterations in an auto-regression scheme (e.g. in an auto-regressive manner). The transformer TF may generate one output token TKout whenever performing each of the plurality of iterations. For example, when performing one iteration, the transformer TF may use the output token Tkout generated by the previous iteration as input token Tkin.

More specifically, in some example embodiments, the transformer performing the first iteration TF_IT1 may generate an (n+1)-th token TKn+1 by using the n-th token TKn generated by the iteration preceding the first iteration (e.g., the 0-th iteration) as the input token Tkin. Similarly to this, the transformer performing the second iteration TF_IT2 may generate an (n+2)-th token TKn+2 by using the (n+1)-th token TKn+1 as the input token Tkin, and the transformer performing the third iteration TF_IT3 may generate an (n+3)-th token TKn+3 by using the (n+2)-th token TKn+2 as the input token Tkin. The number of iterations may vary. Accordingly, more than three, or fewer than three iterations may be performed.

By such a scheme, the transformer acceleration device 100 may sequentially generate a plurality of tokens by executing the transformer TF throughout the plurality of iterations. In this case, the plurality of tokens generated by the transformer TF may form one token sequence with the token stream (e.g., the first to (n-1)-th token TK1 to TKn-1) provided from the external device. For example, the first to (n+2)-th token TK1 to TKn+2 may form one token sequence. The token sequence may include the tokens provided as an input (e.g. the first to (n-1)-th tokens TK1 to TKn-1) and the tokens generated over the plurality of iterations (e.g. the n-th to (n+2)-th tokens TKn to TKn+2).

In some example embodiments, when the transformer acceleration device 100 is used for implementing the LLM, the token sequence may correspond to one or more sentences. However, the scope of the present disclosure is not limited thereto. For instance, the token sequence may be a sequence of embeddings of sections or patches of image data).

In some example embodiments, a maximum length of the token sequence may be predetermined, or, alternatively, may be generated or based on another feature of the transformer acceleration device 100. For example, the maximum length of the token sequence may be determined according to the number of tokens which the transformer TF may process at once. In some example embodiments, the maximum length of the token sequence may be set during manufacturing, or by a user.

In some example embodiments, tokens preceding a token in one token sequence may be referred to as preceding tokens therefor. For example, the first to (n-1)-th tokens TK1 to TKn-1 may be referred to as preceding tokens for the n-th token TKn, and the first to (n+1)-th tokens TK1 to TKn+1 may be referred to as preceding tokens for the (n+2)-th token TKn+2.

When performing one iteration, the transformer TF may generate the output token TKout based on the input token TKin and preceding tokens for the input token TKin. For example, the transformer performing the first iteration TF_IT1 may generate the (n+1)-th token TKn+1 based on the n-th token TKn, and the first to (n-1)-th tokens TK1 to TKn-1. Similarly to this, the transformer performing the second iteration TF_IT2 may generate the (n+2)-th token TKn+2 based on the (n+1)-th token TKn+1, and the first to n-th tokens TK1 to TKn.

As a result, when the transformer TF performs any iteration, calculation results for the plurality of tokens used for performing preceding iterations may be required again. For example, when the transformer TF performs any iteration, a plurality of key vectors KEY and a plurality of value vectors VAL corresponding to the plurality of tokens used for performing the preceding iterations may be required iteratively.

Accordingly, when the transformer TF performs any iteration, the plurality of key vectors KEY and the plurality of value vectors VAL calculated while performing the preceding iterations may be reused. For example, the transformer performing the first iteration TF_IT1 may reuse a plurality of key vectors KEY and a plurality of value vectors VAL corresponding to the first to (n-1)-th tokens TK1 to TKn-1, and the transformer performing the second iterationTF_IT2 may reuse a plurality of key vectors KEY and a plurality of value vectors VAL corresponding to the first to n-th tokens TK1 to TKn.

More specifically, in some example embodiments, whenever performing each iteration, the transformer TF may cache (e.g., store) a plurality of key vectors KEY and a plurality of value vectors VAL corresponding to the input token TKin into the memory device 160. In this case, calculation amount of the transformer TF performing following iterations may be minimized or reduced. Hereinafter, the operation of the transformer TF of each iteration will be described in more detail.

First, the transformer TF may store, in the memory device 160, key-value vectors for the preceding tokens for the n-th token TKn (e.g., the first to (n-1)-th tokens TK1 to TKn-1) before performing the first iteration (for example, while performing the 0-th iteration corresponding to the summarization stage).

Thereafter, the transformer performing the first iteration TF_IT1 may read the key-value vectors for the first to (n-1)-th tokens TK1 to TKn-1 stored in the memory device 160, and generate the key-value vectors for the n-th token TKn. In this case, the transformer performing the first iterationTF_IT1 may be able to generate the (n+1)-th token TKn+1 without calculating the key-value vectors for the first to (n-1)-th tokens TK1 to TKn-1. Meanwhile, the transformer performing the first iteration TF_IT1 may further store the key-value vectors for the n-th token TKn in the memory device 160.

Thereafter, the transformer performing the second iteration TF_IT2 may read the key-value vectors for the first to n-th tokens TK1 to TKn stored in the memory device 160, and generate the key-value vectors for the (n+1)-th token TKn+1. In this case, the transformer performing the second iteration TF_IT2 may be able to generate the (n+2)-th token TKn+2 without calculating the key-value vectors for the first to n-th tokens TK1 to TKn. Meanwhile, the transformer performing the second iteration TF_IT2 may further store the key-value vectors for the (n+1)-th token TKn+1 in the memory device 160.

By such a scheme, the transformer performing the third iteration TF_IT3 may read the key-value vectors for the first to (n+1)-th tokens TK1 to TKn+1 from the memory device 160, and store the key-value vectors for the (n+2)-th token TKn+2 to the memory device 160.

That is, according to some example embodiments of the present disclosure, while performing each iteration, the transformer TF may read, from the memory device 160, the key-value vectors corresponding to the preceding tokens for the output token TKout of the preceding iterations. In addition, the transformer TF may generate the key-value vectors corresponding to the output token TKout of the previous iteration, and cache (e.g., store) the generated key-value vectors in the memory device 160.

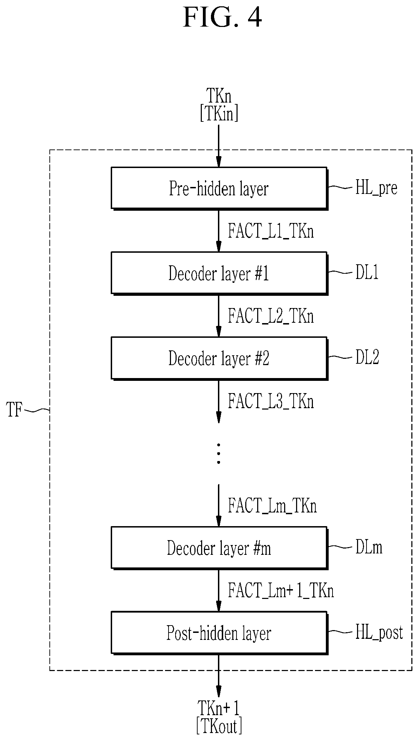

FIG 4 is a block diagram illustrating a configuration of the transformer of FIG 3 according to some example embodiments. Hereinafter, referring to FIGS. 1 to 4, a configuration and an operation of the transformer performing the first iteration will be representatively described. However, the scope of the present disclosure is not limited thereto, and the transformer TF that performs another iteration may be able to be implemented in a similar scheme thereto.

Further, for simpler description, hereinafter, a configuration and an operation of the transformer TF processing one token stream will be described. However, the scope of the present disclosure is not limited thereto, and the transformer TF may also be implemented to simultaneously process a plurality of token streams based on a batching scheme.

The transformer TF may include a pre-hidden layer HL_pre, first to m-th decoder layers DL1 to DLm, and a post-hidden layer HL_post. A pre-hidden layer HL_pre may be an input layer, that takes an input and generates an activation vector (e.g. a hidden vector). A decoder lay may take a preceding activation vector and output a further activation vector. A post-hidden layer HL_post may be an output layer that takes a hidden vector (e.g. an activation vector) and generates an output.

The pre-hidden layer HL_pre may generate a full-activation vector FACT corresponding to the input token TKin based on the input token TKin. For example, the pre-hidden layer HL_pre may generate a full-activation vector FACT_L1_TKn based on the n-th token TKn. As described herein, an activation vector may be the result of an activation function for a particular layer. The layer may receive input data (e.g. a vector) and input the data into the activation function to generate the activation vector. The activation vector may be output (e.g. as the input to a subsequent layer). The activation function may be dependent on weights of the layer. The weights may be determined during training.

In some example embodiments, the pre-hidden layer HL_pre may perform various types of token processing operations such as a token embedding operation, a positional encoding operation, etc.

The first to m-th decoder layers DL1 to DLm may generate the full-activation vector FACT_Lm+1_TKn by sequentially transforming the full-activation vector FACT_L1_TKn. More specifically, in some example embodiments, the k-th decoder layer DLk may generate the full-activation vector FACT_Lk+1_TKn based on the full-activation vector FACT_Lk_TKn (wherein, 'k' is an integer of 1 to m). For example, the first decoder layer DL1 may generate a full-activation vector FACT_L2_TKn based on the full-activation vector FACT_L1_TKn, and the second decoder layer DL2 may generate a full-activation vector FACT_L3_TKn based on the full-activation vector FACT_L2_TKn. By such a scheme, the m-th decoder layers DLm may generate the full-activation vector FACT_Lm+1_TKn based on the full-activation vector FACT_Lm_TKn.

In some example embodiments, dimensions of the full-activation vector FACT_L1_TKn to the full-activation vector FACT_Lm+1_TKn may be the same as each other. For example, the full-activation vector FACT_L1_TKn to the full-activation vector FACT_Lm+1_TKn may include the same number of elements.

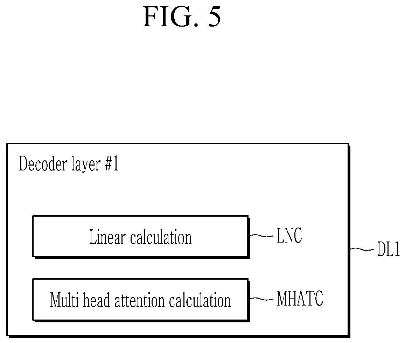

In some example embodiments, each of the first to m-th decoder layers DL1 to DLm may generate the plurality of key vectors KEY and the plurality of value vectors VAL for the input token TKin (e.g., the n-th token TKn) based on the provided full-activation vector FACT. Each of the first to m-th decoder layers DL1 to DLm may store the plurality of key vectors KEY and the plurality of value vectors VAL which are generated in the memory device 160. In this case, when the transformer TF performs following iterations (e.g., the second iteration and the third iteration of FIG 3), the transformer TF may not calculate the plurality of key vectors KEY and the plurality of value vectors VAL corresponding to the n-th token TKn. Some example embodiments of each of the first to m-th decoder layers DL1 to DLm will be described in more detail with reference to FIGS. 5 to 11 below.

The post-hidden layer HL_post may calculate the output token TKout (e.g., the (n+1)-th token TKn+1) based on the full-activation vector FACT_Lm+1_TKn.

In some example embodiments, the post-hidden layer HL_post may perform various types of vector processing operations such as a layer normalization operation, a fully connected network calculation operation, etc.

FIG 5 is a diagram more specifically illustrating the configuration of the decoder layer of FIG 4. Hereinafter, referring to FIGS. 1 to 5, a configuration and an operation of a first decoder layer DL1 will be representatively described. However, the scope of the present disclosure is not limited thereto, and second to m-th decoder layers DL2 to DLm will also be able to be implemented by a similar scheme thereto.

The first decoder layer DL1 may include a linear calculation LNC, and a multi head attention calculation MHATC. The linear calculation LNC and the multi head attention calculation MHATC may be performed by the calculation circuit 120.

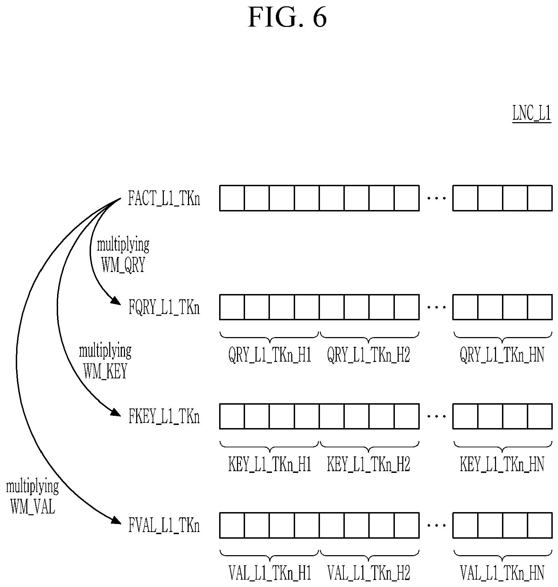

The linear calculation LNC may refer to a calculation of multiplying the full-activation vector FACT with various types of weight matrixes. The linear calculation LNC will be described in more detail with reference to FIG. 6 below.

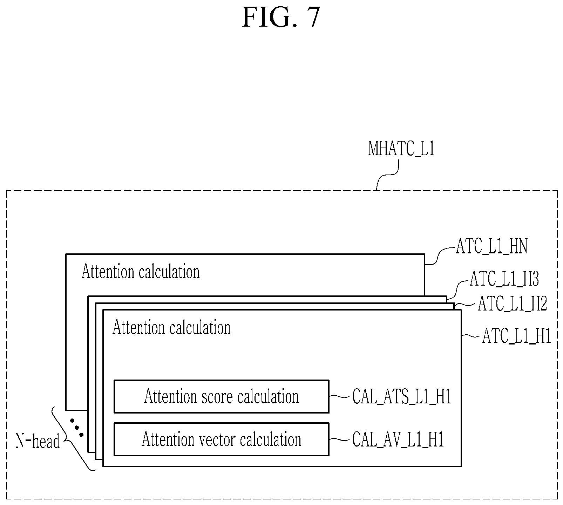

The multi head attention calculation MHATC may refer to a calculation of reflecting a correlation between the input token TKin (e.g., the n-th token TKn) and preceding tokens therefor based on a plurality of heads. Hereinafter, for simpler description, it is assumed that the transformer TF performs the multi head attention calculation MHATC based on N-heads. That is, hereinafter, it is assumed that the number of heads is 'N', where N is an integer greater than or equal to two. The multi head attention calculation MHATC will be described in more detail with reference to FIGS. 7 to 10 below.

Hereinafter, for simpler description, the linear calculation LNC performed by a k-th decoder layer DLk may be referenced as a linear calculation LNC_Lk, and the multi head attention calculation MHATC performed by the k-th decoder layer DLk may be referenced as a multi head attention calculation MHATC_Lk.

FIG 6 is a diagram more specifically illustrating the linear calculation of FIG 5. Referring to FIGS. 1 to 6, the calculation circuit 120 may perform a linear calculation LNC_L1. For example, the calculation circuit 120 may generate a full-query vector FQRY_L1_TKn by multiplying the full-activation vector FACT_L1_TKn and a query weight matrix WM_QRY, generate a full-key vector FKEY_L1_TKn by multiplying the full-activation vector FACT_L1_TKn and a key weight matrix WM_KEY, and generate a full-value vector FVAL_L1_TKn by multiplying the full-activation vector FACT_L1_TKn and a value weight matrix WM_VAL.

In some example embodiments, the calculation circuit 120 may read, from the memory device 160, the query weight matrix WM_QRY, the key weight matrix WM_KEY, and the value weight matrix WM_VAL.

In some example embodiments, weight matrixes used by the transformer TF to perform linear calculations LNC included in different decoder layers DL may be different from each other. For example, the key weight matrix WM_KEY used for the linear calculation LNC_L1 may be different from the key weight matrix WM_KEY used for the linear calculation LNC_L2.

In some example embodiments, weight matrixes used by the transformer TF to perform linear calculations LNC included in the same decoder layers DL included in the plurality of iterations, respectively may be the same as each other. For example, the transformer TF may perform the linear calculations LNC of the first decoder layers DL1 included in the plurality of iterations, respectively based on the same weight matrix.

Each of the full-query vector FQRY_L1_TKn, the full-key vector FKEY_L1_TKn, and the full-value vector FVAL_L1_TKn may be split into a plurality of vectors corresponding to a plurality of heads, respectively. Given this, the term "full" when referring to a vector may refer to a vector that is made up of multiple vectors (e.g. sub-vectors), each corresponding to a respective head. A full-vector may be otherwise known as a multi-head vector (e.g. a full-query vector may be known as a multi-head query vector, a full-key vector may be known as a multi-head key vector, and a full-value vector may be known as a multi-head value vector,) For simpler description, hereinafter, some example embodiments in which each of the full-query vector FQRY_L1_TKn, the full-key vector FKEY_L1_TKn, and the full-value vector FVAL_L1_TKn is split into a plurality of vectors each having four elements will be representatively described. That is, hereinafter, it is assumed that the dimension of head is '4'. However, the scope of the present disclosure is not limited thereto.

The full-query vector FQRY_L1_TKn may be split into plurality of query vectors, from a first a query vector QRY_L1_TKn_H1 to an n-th query vector QRY_L1_TKn_HN, the full-key vector FKEY_L1_TKn may be split into a plurality of key vectors, from a first key vector KEY_L1_TKn_H1 to an n-th key vector KEY_L1_TKn_HN, and the full-value vector FVAL_L1_TKn may be split into a plurality of value vectors from a first value vector VAL_L1_TKn_H1 to an n-th value vector VAL_L1_TKn_HN. In this case, each of the query vector QRY_L1_TKn_H1 to the query vector QRY_L1_HN, the key vector KEY_L1_TKn_H1 to the key vector KEY_L1_TKn_HN, and the value vector VAL_L1_TKn_H1 to the value vector VAL_L1_TKn_HN may include four elements.

In some example embodiments, the full-query vector FQRY_L1_TKn may have a dimension of N times of that of each of the query vectors QRY_L1_TKn_H1 to QRY_L1_TKn_HN (e.g. where N is the number of heads).

In some example embodiments, the full-key vector FKEY_L1_TKn may have a dimension of N times of that of each of the key vectors KEY_L1_TKn_H1 to KEY_L1_TKn_HN.

In some example embodiments, the full-value vector FVAL_L1_TKn may have a dimension of N times of that of each of the value vectors VAL_L1_TKn_H1 to VAL_L1_TKn_HN.

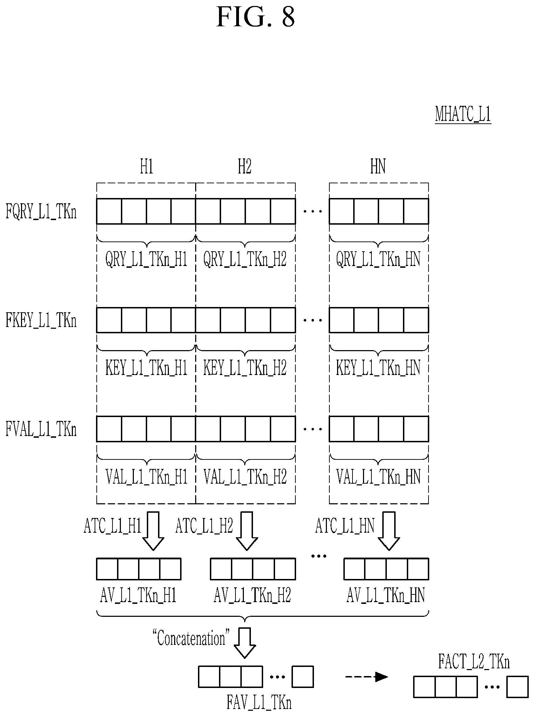

FIGS. 7 and 8 are diagrams more specifically illustrating the multi head attention calculation of FIG 5.

First, referring to FIGS. 1 to 7, the first decoder layer DL1 may include N heads. The calculation circuit 120 may perform a multi head attention calculation MHATC_L1 for the first decoder layer DL1 based on N heads. For example, the multi head attention calculation MHATC_L1 may include a plurality of attention calculations ATC_L1_H1 to ATC_L1_HN corresponding to the first to N-th heads (hereinafter, referenced as H1 to HN, respectively), respectively. The calculation circuit 120 may independently perform the plurality of attention calculations ATC_L1_H1 to ATC_L1_HN.

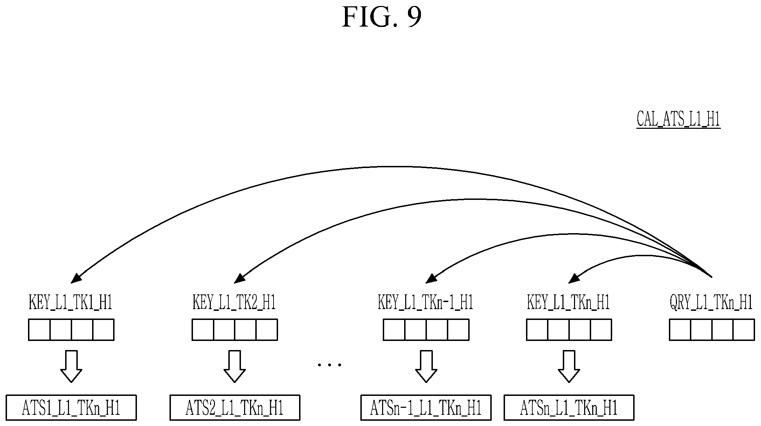

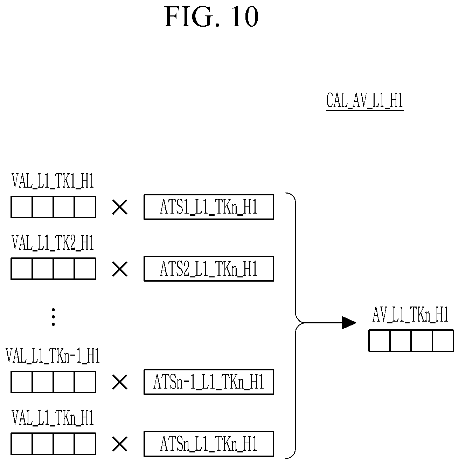

The attention calculation ATC_L1_H1 may include an attention score calculation CAL_ATS_L1_H1 and an attention vector calculation CAL_AV_L1_H1. For example, the calculation circuit 120 may calculate a plurality of attention scores by performing the attention score calculation CAL_ATS_L1_H1, and generate an attention vector by performing the attention vector calculation CAL_AV_L1_H1 based on the calculated plurality of attention scores. The attention score calculation CAL_ATS_L1_H1 will be described in more detail with reference to FIG 9 below, and the attention vector calculation CAL_AV_L1_H1 will be described in more detail with reference to FIG 10 below.

For simpler description, a configuration of the attention calculation ATC_L1_H1 corresponding to the first head is representatively described, but the scope of the present disclosure is not limited thereto, and the attention calculations ATC_L1_H2 to ATC_L1_HN will also be able to be configured by the similar scheme thereto. That is, the calculation circuit 120 may perform the attention score calculation CAL_ATS and the attention vector calculation CAL_AV for each of the plurality of heads.

Referring to FIGS. 1 to 8, the calculation circuit 120 may perform the plurality of attention calculations ATC_L1_H1 to ATC_L1_HN based on the first to N-th heads H1 to HN.

The calculation circuit 120 may perform the plurality of attention calculations ATC_L1_H1~ATC_L1_HN based on the plurality of query vectors (QRY_L1_TKn_H1 to QRY_L1_TKn_HN), the plurality of key vectors (KEY_L1_TKn_H1 to KEY_L1_TKn_HN), and the plurality of value vectors (VAL_L1_TKn_H1 to VAL_L1_TKn_HN described with reference to FIG 6 above. For example, the calculation circuit 120 may generate the attention vector AV_L1_TKn_H1 by performing the attention calculation ATC_L1_H1 corresponding to the first head H1 of the first decoder layer DL1 based on the query vector QRY_L1_TKn_H1, the key vector KEY_L1_TKn_H1, and the value vector VAL_L1_TKn_H1. A scheme in which the calculation circuit 120 performs the attention calculation ATC_L1_H1 will be described in more detail with reference to FIGS. 9 and 10 below.

Similar to this, the calculation circuit 120 may generate an attention vector AV_L1_TKn_H2 by performing an attention calculation ATC_L1_H2 corresponding to the second head H2 of the first decoder layer DL1 based on the query vector QRY_L1_TKn_H2, the key vector KEY _L1_TKn _H2, and the value vector VAL_L1_TKn_H2.

By such a scheme, the calculation circuit 120 may independently perform the plurality of attention calculations (ATC_L1_H1 to ATC_L1_HN). For example, the calculation circuit 120 may calculate the plurality of attention vectors (AV_L1_TKn_H1 to AV_L1_TKn_HN) based on different processing cores, or at different times.

Thereafter, the transformer TF may concatenate the plurality of attention vectors (the first to n-th attention vectors AV_L1_TKn_H1 to AV_L1_TKn_HN) to each other. For example, the transformer TF concatenates the attention vectors AV_L1_TKn_H1 to AV_L1_TKn_HN to generate the full-attention vector FAV_L1_TKn. Thereafter, the transformer TF may generate the full-activation vector FACT_L2_TKn by executing one or more of various types of vector processing steps (e.g. algorithms) such as a residual layer, a fully-connected layer, etc., based on the full-attention vector FAV_L1_TKn.

In some example embodiments, the attention calculation ATC performed based on a single, specific head may be referred to as single head attention. For example, the attention calculation ATC_L1_H1 performed based on the first head H1 may be referred to as the single head attention for the first head H1. However, the scope of the present disclosure is not limited to the term.

FIG 9 is a diagram more specifically illustrating the attention score calculation of FIG 7. That is, hereinafter, referring to FIGS. 1 to 9, the attention score calculation CAL_ATS_L1_H1 performed by the first head H1 of the first decoder layer DL1 based on the n-th token TKn will be representatively described.

The calculation circuit 120 may generate attention scores ATS1_L1_TKn_H1 to ATSn_L1_TKn_H1 corresponding to the n-th token TKn and the preceding tokens therefor (e.g., the first to (n-1)-th tokens TK1 to TKn-1) based on the query vector QRY_L1_TKn_H1. For example, the calculation circuit 120 may calculate a first attention score ATS1_L1_TKn_H1 based on a dot product result of the query vector for the n-th token QRY_L1_TKn_H1 and the key vector for the first token KEY_L1_TK1_H1, and calculate a second attention score ATS2_L1_TKn_H1 based on a dot product result of the query vector for the n-th token QRY_L1_TKn_H1 and the key vector for the second token KEY_L1_TK2_H1. By such a scheme, the calculation circuit 120 may calculate an n-th attention score ATSn_L1_TKn_H1 based on a dot product result of the n-th query vector QRY_L1_TKn_H1 and the n-th key vector KEY_L1_TKn_H1. That is, for each token in the sequence (for each of the first to n-th tokens) the key vector for that token is multiplied by the query vector for the last (n-th) token. In this case, the first to (n-1)-th key vectors KEY_L1_TK1_H1 to KEY_L1_TKn-1_H1 corresponding to the preceding tokens (hereinafter, may be referred to as preceding key vectors) may have been already calculated in advance in a preceding iteration (e.g., the 0-th iteration).

That is, in order to perform the attention score calculation CAL_ATS_L1_H1, the calculation circuit 120 may require not only the key vector KEY for the input token but also the preceding key vectors therefor iteratively. As a result, the calculation circuit 120 may store the calculated key vector KEY in the memory device 160, and then reuse the key vector KEY. For example, while the transformer TF performs the first iteration, the first head H1 of the first decoder layer DL1 may store the key vector KEY_L1_TKn_H1 in the memory device 160. In this case, while the transformer TF performs the second iteration, the calculation circuit 120 may be able to perform the attention score calculation CAL_ATS_L1_H1 by reusing the key vector KEY_L1_TKn_H1 stored in the memory device 160.

FIG 10 is a diagram more specifically illustrating the attention vector calculation of FIG 7. That is, hereinafter, referring to FIGS. 1 to 10, the attention vector calculation CAL_AV_L1_H1 performed with respect to the first head H1 of the first decoder layer DL1 based on the n-th token TKn will be representatively described.

The calculation circuit 120 may perform the attention vector calculation CAL_AV for the n-th token TKn, based on the attention scores ATS and the value vectors VAL respectively corresponding to the n-th token TKn and the preceding tokens therefor (e.g., the first to (n-1)-th tokens TK1 to TKn-1). For example, the calculation circuit 120 may generate the attention vector AV_L1_TKn_H1 based on a result of accumulating multiplications of the value vectors VAL_L1_TK1_H1 to VAL_L1_TKn_H1 and the attention scores ATS1_L1_TKn_H1 to ATSn_L1_TKn_H1, respectively. In this case, value vectors VAL_L1_TK1_H1 to VAL_L1_TKn-1_H1 corresponding to the preceding tokens (hereinafter, may be referred to as preceding value vectors) may have been already calculated in advance by the preceding iteration (e.g., the 0-th iteration).

That is, in order to perform the attention vector calculation CAL_AV_L1_H1, the calculation circuit 120 may require not only the value vector VAL for the input token TKin but also the preceding value vectors therefor. As a result, the calculation circuit 120 may store the calculated value vector VAL in the memory device 160, and then reuse the value vector VAL.

For example, while the transformer TF performs the first iteration, the first head H1 of the first decoder layer DL1 may be able to store the value vector VAL_L1_TKn_H1 in the memory device 160. In this case, while the transformer TF performs the second iteration, the calculation circuit 120 may be able to perform the attention vector calculation CAL_AV_L1_H1 by reusing the value vector VAL_L1_TKn_H1 stored in the memory device 160.

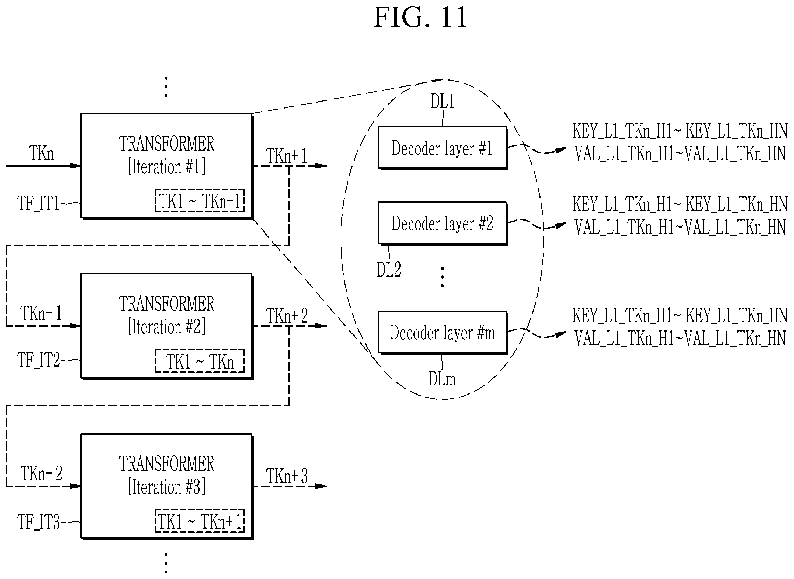

FIG 11 is a diagram more specifically illustrating the operation of the transformer of FIG 3. Hereinafter, for simpler description, referring to FIGS. 1 to 11, the key vectors KEY and the value vectors VAL which the transformer TF caches (e.g., stores) into the memory device 160 while the first iteration is performed will be representatively described.

While the transformer TF performs the first iteration, each of the first to m-th decoder layers DL1 to DLm may store a plurality of key vectors KEY for first to N-th heads H1 to HN in the memory device 160. For example, the first decoder layer DL1 may store key vectors KEY_L1_TKn_H1 to KEY_L1_TKn_HN in the memory device 160, and the second decoder layer DL2 may store key vectors KEY_L2_TKn_H1 to KEY_L2_TKn_HN in the memory device 160.

Similar to this, while the transformer TF performs the first iteration, each of the first to m-th decoder layers DL1 to DLm may store a plurality of value vectors VAL for the first to N-th heads H1 to HN in the memory device 160. For example, the first decoder layer DL1 may store value vectors VAL_L1_TKn_H1 to VAL_L1_TKn_HN in the memory device 160, and the second decoder layer DL2 may store value vectors VAL_L2_TKn_H1 to VAL_L2_TKn_HN in the memory device 160.

In other words, when one decoder layer DL is executed, the calculation circuit 120 may store a plurality of key vectors KEY and a plurality of value vectors VAL corresponding to the input token TKin in the memory device 160.

By such a scheme, whenever the transformer TF performs one decoder layer DL, N-pairs of 'key vector KEY-value vector VAL' (N key-value pairs) may be further stored in the memory device 160. Accordingly, whenever the transformer TF performs one iteration, (m x N)-pairs of 'key vector KEY-value vector VAL' may be further stored in the memory device 160.

In some example embodiments, each of the plurality of key vectors KEY and the plurality of value vectors VAL cached to the memory device 160 may also be referred to as a cache vector.

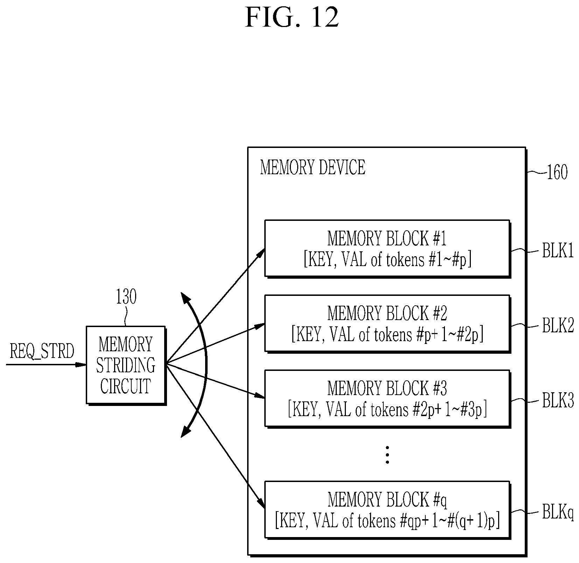

FIG 12 is a block diagram more specifically illustrating the operation of the memory striding circuit according to some example embodiments of the present disclosure. Referring to FIGS. 1 to 12, the memory striding circuit 130 may receive the striding request REQ_STRD. The memory striding circuit 130 may sequentially access a plurality of memory regions included in the memory device 160 in response to the striding request REQ_STRD.

The memory device 160 may include a plurality of memory blocks BLK. For example, the memory device 160 may include first to q-th memory blocks BLK1 to BLKq.

Each of the plurality of memory blocks BLK may store key vectors KEY and value vectors VAL for a plurality of tokens. For example, the first memory block BLK1 may include a memory region for storing key vectors KEY and value vectors VAL for first to p-th tokens TK1 to TKp, and the second memory block BLK2 may include a memory region for storing key vectors KEY and value vectors VAL for (p+1)-th to (2p)-th tokens TKp+1 to TK2p. Similarly to this, the q-th memory block BLKq may include a memory region for storing key vectors KEY and value vectors VAL for (qp+1)-th to ((q+1)p)-th tokens TKqp+1 to TK(q+1)p.

More specifically, in some example embodiments, each memory block BLK may store key vectors KEY and value vectors VAL for a plurality of decoder layers DL included in the transformer TF. For example, the first memory block BLK1 may store key vectors KEY and value vectors VAL which are corresponding to the first to p-th tokens TK1 to TKp and generated by the first to m-th decoder layers DL1 to DLm.

For simpler description, hereinafter, some example embodiments in which each memory block BLK is implemented to store both of the key vectors KEY and the value vector VAL will be representatively described. However, the scope of the present disclosure is not limited thereto, and each memory block BLK may be able to be implemented to store only the key vectors KEY, or implemented to store only the value vectors VAL.

Capacities of the plurality of memory blocks BLK may be the same as each other. For example, the plurality of memory blocks BLK may occupy memory regions having the same size as each other. In this case, the numbers of cache vectors (e.g., key vectors KEY or value vectors VAL) which may be stored in the plurality of memory blocks BLK may be the same as each other.

In some example embodiments, the numbers of cache vectors which may be stored in the plurality of memory blocks BLK may be determined based on the type of artificial intelligence model executed by the transformer acceleration device 100. That is, the scope of the present disclosure is not limited to a size of 'p'.

In some example embodiments, each of the plurality of memory blocks BLK may occupy continuous memory regions. A continuous memory region may be a continuous region of physical memory addresses. For example, each memory block BLK may occupy memory regions corresponding to a plurality of memory cells in which a row address and/or a bank address are adjacent to each other. That is, each memory block BLK may occupy a discreet, physical section of the memory device 160. However, the scope of the present disclosure is not limited thereto.

In some example embodiments, forms of the memory regions occupied by each of the plurality of memory blocks BLK may be the same as each other. For example, sizes of row address ranges occupied by each of the plurality of memory blocks BLK may be the same as each other, and sizes of bank address ranges occupied by each of the plurality of memory blocks BLK may be the same as each other. However, the scope of the present disclosure is not limited thereto.

Meanwhile, the processing circuit 110 may be implemented to sequentially allocate the plurality of memory blocks BLK to the memory device 160 according to a length of a token sequence generated by an auto-regressive operation of transformer TF described with reference to FIGS. 3 to 11. For example, the processing circuit 110 may determine whether to allocate a new memory block BLK based on whether space to store key vectors KEY and value vectors VAL for a new generated token remains in the memory block BLK allocated to the memory device 160.

More specifically, in some example embodiments, when the transformer TF generates the p-th token TKp, a total length of the token sequence may become 'p'. In this case, there may be an empty space which may store the key vectors KEY and the value vectors VAL for the p-th token TKp in the first memory block BLK1. Accordingly, the processing circuit 110 may not allocate a memory region for the new memory block BLK to the memory device 160.

On the contrary, when the transformer TF generates the (p+1)-th token TKp+1, a total length of the token sequence may become 'p+1'. In this case, the first memory block BLK1 may already store the key vectors KEY and the value vectors VAL for the first to p-th tokens TK1 to TKp. That is, there will be no empty space which may store the key vectors KEY and the value vectors VAL for the (p+1)-th token TKp+1 in the first memory block BLK1. Accordingly, the processing circuit 110 may newly allocate a memory region for a second memory block BLK2 to the memory device 160.

By such a scheme, as the length of the token sequence increases, the processing circuit 110 may newly allocate the memory region for the new memory block BLK to the memory device 160. In this case, the plurality of memory blocks BLK may be allocated in different time points each other. Accordingly, when another data is further stored in the memory device 160 between the time points at which the plurality of memory blocks BLK are allocated, the plurality of memory blocks BLK may be allocated with mutually separated addresses. For example, when the transformer acceleration device 100 caches key-value vectors for another token sequence (not illustrated) generated by a batch operation to the memory device 160, the plurality of memory blocks BLK may be allocated to mutually separated addresses.

However, similarly to the description by referring to FIGS. 1 to 11 above, when the calculation circuit 120 performs the attention calculation ATC, the calculation circuit 120 may require both of the plurality of key vectors KEY and the plurality of value vectors VAL for the preceding tokens. For example, when the calculation circuit 120 performs the attention calculation ATC for generating the (qp+2)-th token TKqp+2, the calculation circuit 120 may require both of the plurality of key vectors KEY and the plurality of value vectors VAL for the first to (qp+1)-th tokens TK1 to TKqp+1. That is, the calculation circuit 120 may require the plurality of key vectors KEY and the plurality of value vectors VAL distributed in the plurality of memory blocks BLK in order to perform the attention calculation ATC.

The memory striding circuit 130 may sequentially access the plurality of memory blocks BLK in response to the striding request REQ_STRD. For example, the memory striding circuit 130 may sequentially read the plurality of key vectors KEY and the plurality of value vectors VAL distributed in the first to q-th memory blocks BLK1 to BLKq.

In some comparative examples, the processing circuit 110 may be implemented to directly issue a memory access command CMD_MA for the plurality of key vectors KEY and the plurality of value vectors VAL distributed in the plurality of memory blocks BLK. In this case, since the processing circuit 110 should directly manage addresses storing the plurality of key vectors KEY and the plurality of value vectors VAL, a processing load of the processing circuit 110 may increase.

In some example embodiments, the memory striding circuit 130 may be implemented to issue the memory access command CMD_MA for the plurality of key vectors KEY and the plurality of value vectors VAL instead of the processing circuit 110 in response to the striding request REQ_STRD. In this case, since the processing circuit 110 may not directly manage the addresses storing the plurality of key vectors KEY and the plurality of value vectors VAL, and a frequency of which the processing circuit 110 issues the memory access command CMD_MA may be minimized or reduced, the processing load processed by the processing circuit 110 may be minimized or reduced.

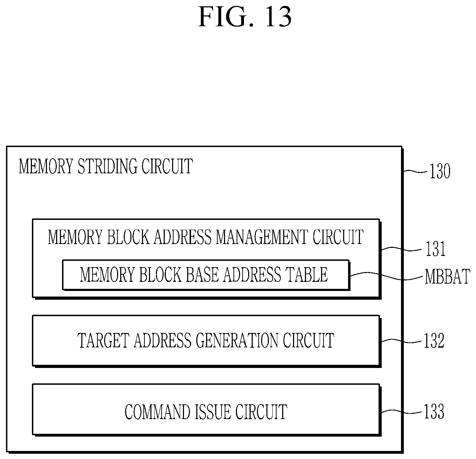

FIG 13 is a block diagram more specifically illustrating the memory striding circuit of FIG 2. Referring to FIGS. 1 to 13, the memory striding circuit 130 may include a memory block address management circuit 131, a target address generation circuit 132, and a command issue circuit 133.

The memory block address management circuit 131 may include a memory block base address table MBBAT. The memory block base address table MBBAT may include a memory block base address (hereinafter, referenced as "BASE") of each of the plurality of memory blocks BLK.

In some example embodiments, the memory block base address may be one address included in a memory block BLK. That is, the memory block base address may be one address representing the memory block BLK. More specifically, in some example embodiments, the memory block base address may refer to a smallest address among the addresses of the memory region occupied by the memory block BLK. However, the scope of the present disclosure is not limited thereto.

In some example embodiments, the memory block address management circuit 131 may receive the memory block base address table MBBAT from the processing circuit 110. For example, the memory block address management circuit 131 may receive the striding request REQ_STRD including the memory block base address table MBBAT. However, the scope of the present disclosure is not limited thereto, and the memory block address management circuit 131 may also receive the memory block base address table MBBAT from an external host device (e.g., a central processing unit) of the transformer acceleration device 100 through the host interface circuit 140.

The target address generation circuit 132 may generate a target address (hereinafter, referenced as "TG") storing the key vector KEY or the value vector VAL to be read from the memory device 160. For example, the target address generation circuit 132 may generate a target address based on the memory block base address stored in the memory block base address table MBBAT.

In some example embodiments, the target address generation circuit 132 may generate a target address TG based on a relative address (hereinafter, referenced as subblock offset OFST) of the memory region to be accessed, for the memory block base address. For example, the target address generation circuit 132 may generate the target address TG by adding the subblock offset OFST to the memory block base address BASE.

The command issue circuit 133 may issue a memory access command CMD_MA for the target address TG. For example, the command issue circuit 133 may issue an active command and a read command for the target address TG An active command may be a command that activates a specific region (e.g. row) of memory. An active command may prepare data in the selected region to be read (e.g. by moving the data from memory cells to a buffer). A read command may read data (e.g. may access and output data) from the memory (e.g. may read (e.g. fetch) the data from the buffer following a read command).

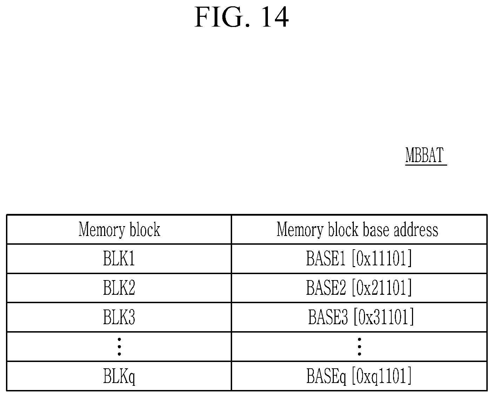

FIG 14 is a diagram illustrating a memory block base address table of FIG 13. Referring to FIGS. 1 to 14, the memory block base address table MBBAT may store a plurality of memory block base addresses BASE corresponding to the plurality of memory blocks BLK, respectively. For example, the memory block base address table MBBAT may store first to q-th memory block base addresses BASE1 to BASEq corresponding to first to q-th memory blocks BLK1 to BLKq, respectively.

The first to q-th memory block base addresses BASE1 to BASEq may be different from each other. For example, the first memory block base address BASE1 may be "0x11101", the second memory block base address BASE2 may be "0x21101", the third memory block base address BASE3 may be "0x31101", and the q-th memory block base address BASEq may be "0xq1101".

For simpler description, in the present disclosure, some example embodiments that each of the plurality of memory block base addresses BASE is 20 bits is representatively illustrated, but the scope of the present disclosure is not limited thereto. For example, each of the plurality of memory block base addresses BASE may be any number of bits corresponding to a bank group address, a bank address, a row address, a column address, and/or any combination thereof.

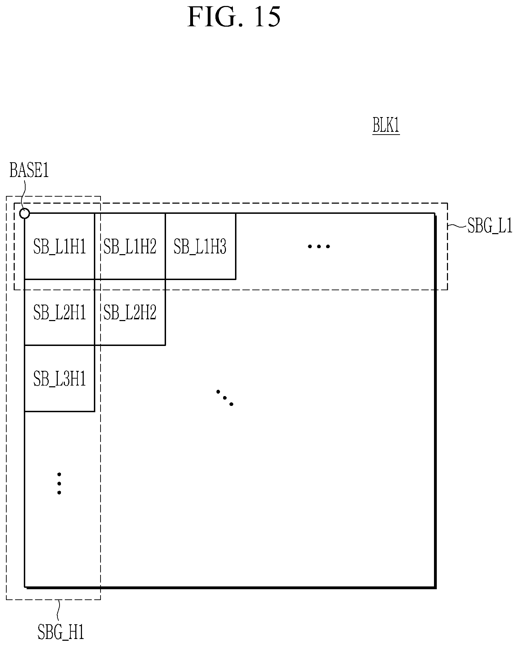

FIG 15 is a diagram more specifically illustrating a memory block of FIG 12. Hereinafter, referring to FIGS. 1 to 15, the configuration of the first memory block BLK1 will be representatively described. However, the scope of the present disclosure is not limited thereto, and each of the plurality of memory blocks BLK included in the memory device 160 may be configured by the similar scheme thereto.

The first memory block BLK1 may include a plurality of subblocks SB. For example, the first memory block BLK1 may include a plurality of subblocks SB referenced as "SB_LkHj" (k is an integer greater than or equal to 1 and less than or equal to m, and j is an integer greater than or equal to 1 and less than or equal to N). For example, the first memory block BLK1 may include a subblock SB_L1H1 to a subblock SB_LmHN. N may be the number of heads H and m may be the number of decoder layers DL in the transformer.

The plurality of subblocks SB may correspond to different combinations of the plurality of decoder layers DL and the plurality of heads H. Each of the plurality of subblocks SB may correspond to one decoder layer DL and one head H. For example, the subblock SB_LkHj may correspond to a k-th decoder layer DLk and a j-th head Hj. More specifically, in some example embodiments, the subblock SB_L1H1 may correspond to the first decoder layer DL1 and the first head H1, the subblock SB_L1H2 may correspond to the first decoder layer DL1 and the second head H2, and the subblock SB_L2H1 may correspond to the second decoder layer DL2 and the first head H1.

In some example embodiments, the number of subblocks included in one memory block BLK may be determined based on the product of the number (e.g., m) of decoder layers and the number (e.g., N) of heads.

Each of the plurality of subblocks SB may store the plurality of key vectors KEY and/or the plurality of value vectors VAL for the corresponding decoder layer DL and head H, cached to the memory device 160 for the attention calculation ATC. For example, the subblock SB_LkHj may store the plurality of key vectors KEY and/or the plurality of value vectors VAL cached for the attention calculation ATC_Lk_Hj. That is, the subblock SB_LkHj included in the first memory block BLK1 may store key vectors KEY_Lk_TK1_Hj to KEY_Lk_TKp_Hj and/or value vectors VAL_Lk_TK1_Hj to VAL_Lk_TKp_Hj for the first to p-th tokens TK1 to TKp, which are cached for the attention calculation ATC_Lk_Hj. More specifically, in some example embodiments, the subblock SB_L1H1 included in the first memory block BLK1 may store key vectors KEY_L1_TK1_H1 to KEY_L1_TKp_H1 and/or value vectors VAL_L1_TK1_H1 to VAL_L1_TKp_H1 for the first to p-th token TK1 to TKp; the subblock SB_L1H2 included in the first memory block BLK1 may store key vectors KEY_L1_TK1_H2 to KEY_L1_TKp_H2 and/or value vectors VAL_L1_TK1_H2 to VAL_L1_TKp_H2 for the first to p-th token TK1 to TKp; and the subblock SB_L2H1 included in the first memory block BLK1 may store key vectors KEY_L2_TK1_H1 to KEY_L2_TKp_H1 and/or value vectors VAL_L2_TK1_H1 to VAL_L2_TKp_H1 for the first to p-th token TK1 to TKp.

That is, according to some example embodiments of the present disclosure, each of the plurality of subblocks SB may store a plurality of key vectors KEY and/or a plurality of value vectors VAL. However, hereinafter, for simpler description, addresses storing the plurality of key vectors KEY in the plurality of subblocks SB will be representatively described. As a result, hereinafter, some example embodiments in which the memory striding circuit 130 accesses the plurality of key vectors KEY stored in the memory device 160 will be representatively described. However, the scope of the present disclosure is not limited thereto, and one subblock SB may be implemented to store the plurality of value vectors VAL, or also implemented to store both the plurality of key vectors KEY and the plurality value vectors VAL. In this case, the memory striding circuit 130 may be able to access the plurality of value vectors VAL stored in the memory device 160, or access both of the plurality of key vectors KEY and the plurality of value vectors VAL stored in the memory device 160.

Subblocks corresponding to the k-th decoder layer DLk among the plurality of subblocks SB may form a subblock group SBG_Lk. For example, a subblocks SB_L1H1 to SB_L1HN may form a subblock group SBG_L1.

Subblocks corresponding to the j-th head Hj among the plurality of subblocks SB may form a subblock group SBG_Hj. For example, the subblocks SB_L1H1 to SB_LmH1 may form a subblock group SBG_H1.

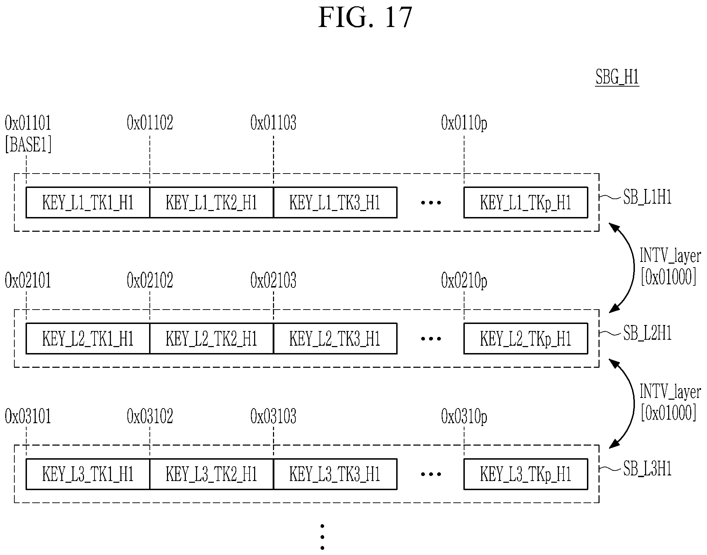

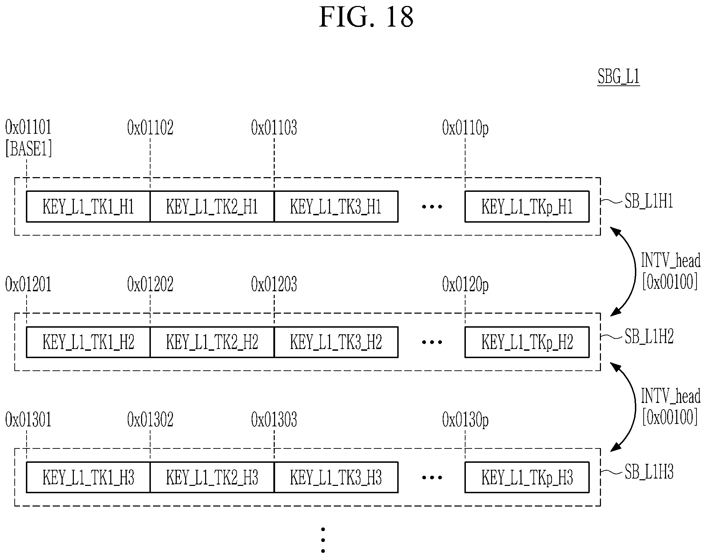

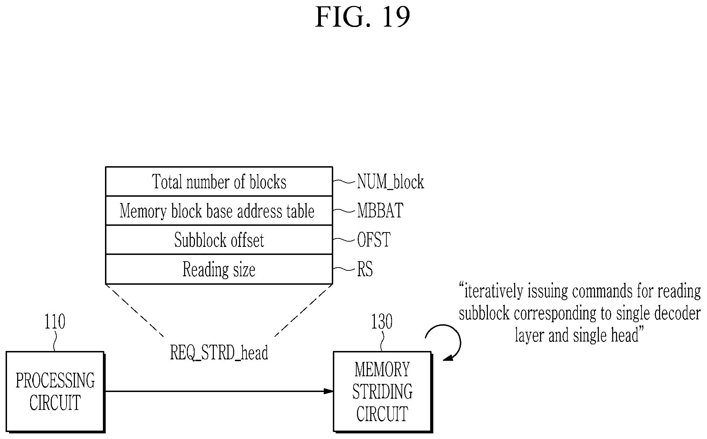

Address intervals of the plurality of subblocks included in one subblock group SBG may be same as each other. For example, address intervals between the subblocks SB_L1H1 to SB_L1HN may be the same as each other, and address intervals between the subblocks SB_L1H1 SB_LmH1 may be the same as each other. Accordingly, the target address generation circuit 132 may be able to identify 'subblock base addresses' respectively corresponding to all subblocks SB included in the first memory block BLK1, by sequentially adding the address intervals to the first memory block base address BASE1. The address intervals between the plurality of subblocks SB will be described with reference to FIGS. 17 and 18 below, and the operation of the target address generation circuit 132 will be described in more detail with reference to FIGS. 19 to 30 below.

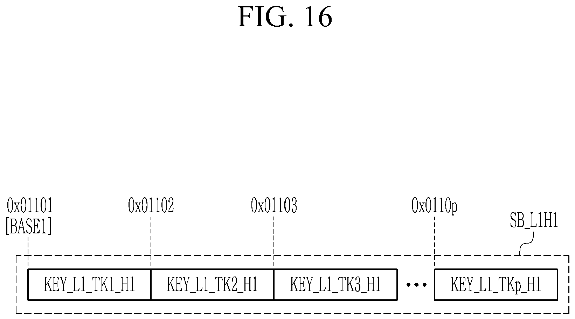

FIG 16 is a diagram more specifically illustrating a configuration of a subblock illustrated in FIG 15. Hereinafter, referring to FIGS. 1 to 16, the configuration of the subblock SB_L1H1 will be representatively described. However, the scope of the present disclosure is not limited thereto, and other subblocks SB included in the first memory block BLK1 may be configured by the similar scheme thereto.

The subblock SB_L1H1 may store the key vectors KEY_L1_TK1_H1 to KEY_L1_TKp_H1. The key vectors KEY_L1_TK1_H1 to KEY_L1_TKp_H1 may be stored in mutually continuous (or contiguous) addresses in the memory device 160. For example, the addresses may be adjacent to one another, and may be in a continuous (or uninterrupted) string, and occupy a discreet, physical section of the memory device 160. For example, the key vector KEY_L1_TK1_H1 may be stored in an address "0x01101", the key vector KEY_L1_TK2_H1 may be stored in an address "0x01102", and the key vector KEY_L1_TK3_H1 may be stored in an address "0x01103". Similarly to this, the key vector KEY_L1_TKp_H1 may be stored in an address "0x0110p". That is, the subblock SB_L1H1 may occupy memory regions corresponding to the addresses "0x01101" to "0x0110p" of the memory device 160.

In some example embodiments, the size of the subblock SB may be the same as a reading size which is a unit continuously read (e.g., a unit which is read together) from the memory striding circuit 130. For example, when the subblock SB_L1H1 occupies memory regions corresponding to p-addresses which increase from the address "0x01101" by "0x00001", the memory striding circuit 130 may continuously read data stored in p-addresses which increase from the target address by "0x00001". A relationship between the reading size and the size of the subblock SB will be described in more detail with reference to the following drawings.

For simpler description, in FIG 16, some example embodiments in which the subblock SB_L1H1 occupies the memory regions corresponding to p addresses which increase from the address "0x01101" by "0x00001" is representatively illustrated, but the scope of the present disclosure is not limited thereto. For example, the subblock SB_L1H1 may also occupy the memory regions corresponding to p-addresses which increase from the first memory block base address BASE1 by any size.

In some example embodiments, the subblock SB_L1H1 may correspond to one page of the memory device 160. For example, the memory region occupied by the subblock SB_L1H1 may correspond to one memory bank and one row address included in the memory device 160. However, the scope of the present disclosure is not limited thereto.

In some example embodiments, the subblock SB_L1H1 may correspond to two or more pages of the memory device 160. In this case, the subblock SB_L1H1 may occupy a memory region corresponding to two or more row addresses in one memory bank included in the memory device 160, or occupy a memory region corresponding to a single row address in two or more memory banks included in the memory device 160, or occupy a memory region corresponding to two or more row addresses included in two or more memory banks included in the memory device 160. However, the scope of the present disclosure is not limited thereto.

FIGS. 17 and 18 are diagrams more specifically illustrating a subblock group of FIG 15. Hereinafter, the configuration of the subblock group SBG_H1 will be described with reference to FIG 17, and the configuration of the subblock group SBG_L1 will be described with reference to FIG. 18.

First, referring to FIGS. 1 to 17, the subblock group SBG_H1 may include a plurality of subblocks SB. For example, the subblock group SBG_H1 may include the subblock SB_L1H1 to the subblock SB_L3H1.

Similarly to the description by referring to FIG 16 above, the subblock SB_L1H1 may store the key vectors KEY_L1_TK1_H1 to KEY_L1_TKp_H1. Similarly to this, the subblock SB_L2H1 may store the key vectors KEY_L2_TK1_H1 to KEY_L2_TKp_H1 and the subblocks SB_L3H1 may store the key vectors KEY_L3_TK1_H1 to KEY_L3_TKp_H1.

Address intervals between the plurality of subblocks SB included in the subblock group SBG_H1 may be the same as each other. For example, address intervals between the subblock SB_L1H1 and the subblock SB_L2H1, and address intervals between the subblock SB_L2H1 and the subblock SB_L3H1 may be a layer address interval INTV_layer. Hereinafter, for simpler description, it is assumed that the layer address interval INTV_layer is "0x01000".

More specifically, in some example embodiments, a difference between addresses storing the key vectors KEY_L1_TK1_H1~KEY_L1_TKp_H1 and addresses storing the key vectors KEY _L2_TK1_H1~KEY_L2_TKp_H1, respectively may be the layer address interval INTV_layer, and a difference between addresses storing the key vectors KEY_L2_TK1_H1~KEY_L2_TKp_H1 and addresses storing the key vectors KEY_L3_TK1_H1~KEY_L3_TKp_H1, respectively may be the layer address interval INTV _layer.

That is, the addresses occupied by each of the subblocks SB included in the subblock group SBG_H1 may correspond to addresses obtained by adding an integer multiple of the layer address interval INTV_layer to the addresses occupied by the subblock SB_L1H1, respectively. For example, the addresses occupied by the subblock SB_L2H1 may correspond to addresses obtained by adding the layer address interval INTV_layer to the addresses occupied by the subblock SB_L1H1, respectively; and the addresses occupied by the subblock SB_L3H1 may correspond to addresses obtained by adding twice of the layer address interval INTV_layer to the addresses occupied by the subblock SB_L1H1, respectively.

Accordingly, according to some example embodiments of the present disclosure, the target address generation circuit 132 may calculate the subblock base address for each of the subblocks SB included in the subblock group SBG_H1 by sequentially adding the layer address interval INTV_layer to the first memory block base address BASE1. More specifically, in some example embodiments, the target address generation circuit 132 may calculate a subblock base address "0x02101" for the subblock SB_L2H1 by adding the layer address interval INTV_layer "0x01000" to the subblock base address "0x01101" for the subblock SB_L1H1 (that is, the first memory block base address BASE1); and calculate a subblock base address "0x03101" for the subblock SB_L3H1 by adding the layer address interval INTV _layer "0x01000" to the subblock base address "0x02101" for the subblock SB _L2H1. In this case, even though the memory striding circuit 130 does not directly manage the subblock base address for each of the plurality of subblocks SB, the memory striding circuit 130 may calculate the subblock base address for each of the plurality of subblocks SB.

For simpler description, in FIG 17, the configuration of the subblock group SBG_H1 is representatively described, but the scope of the present disclosure is not limited thereto. For example, the subblock groups SBG_H2 to SBG_Hm may also be implemented similarly to the subblock group SBG_H1. More specifically, in some example embodiments, an address interval between subblocks included in the subblock groups SBG_H2 to SBG_Hm may be the layer address interval INTV_layer.

Subsequently, referring to FIGS. 1 to 16, and 18, the subblock group SBG_L1 may include a plurality of subblocks SB. For example, the subblock group SBG_L1 may include the subblock SB_L1H1 to the subblock SB_L1H3.

Similarly to the description by referring to FIG 16 above, the subblock SB_L1H1 may store the key vectors KEY_L1_TK1_H1 to KEY_L1_TKp_H1. Similarly to this, the subblock SB_L1H2 may store the key vectors KEY_L1_TK1_H2 to KEY_L1_TKp_H2 and the subblocks SB_L1H3 may store the key vectors KEY_L1_TK1_H3 to KEY_L1_TKp_H3.

Address intervals between the plurality of subblocks SB included in the subblock group SBG_L1 may be the same as each other. For example, address interval between the subblock SB_L1H1 and the subblock SB_L1H2, and address interval between the subblock SB_L1H2 and the subblock SB_L1H3 may be a head address interval INTV_head. Hereinafter, for simpler description, it is assumed that the head address interval INTV_head is "0x00100".

More specifically, in some example embodiments, a difference between addresses storing the key vectors KEY_L1_TK1_H1 to KEY_L1_TKp_H1 and addresses storing the key vectors KEY_L1_TK1_H2 to KEY_L1_TKp_H2, respectively may be the head address interval INTV_head, and a difference between addresses storing the key vectors KEY_L1_TK1_H2 to KEY_L1_TKp_H2 and addresses storing the key vectors KEY_L1_TK1_H3 to KEY_L1_TKp_H3, respectively may be the head address interval INTV_head.

That is, the addresses occupied by the respective subblocks SB included in the subblock group SBG_L1 may correspond to addresses obtained by adding an integer multiple of the head address interval INTV_head to the addresses occupied by the subblock SB_L1H1, respectively. For example, the addresses occupied by the subblock SB_L1H2 may correspond to addresses obtained by adding the head address interval INTV_head to the addresses occupied by the subblock SB_L1H1, respectively; and the addresses occupied by the subblock SB_L1H3 may correspond to addresses obtained by twice adding the head address interval INTV_head to the addresses occupied by the subblock SB_L1H1, respectively.

Accordingly, according to some example embodiments of the present disclosure, the target address generation circuit 132 may identify the subblock base address for each of the plurality of subblocks SB included in the subblock group SBG_L1 by sequentially adding the head address interval INTV_head to the first memory block base address BASE1. More specifically, in some example embodiments, the target address generation circuit 132 may calculate a subblock base address "0x01201" for the subblock SB_L1H2 by adding the head address interval INTV_head "0x00100" to the subblock base address "0x01101" for the subblock SB_L1H1 (that is, the first memory block base address BASE1); and calculate a subblock base address "0x01301" for the subblock SB_L1H3 by adding the head address interval INTV_head "0x00100" to the subblock base address "0x01201" for the subblock SB_L1H2. In this case, even though the memory striding circuit 130 does not directly manage the subblock base address for each of the plurality of subblocks SB, the memory striding circuit 130 may calculate the subblock base address for the plurality of subblocks SB.

For simpler description, in FIG 18, the configuration of the subblock group SBG_L1 is representatively described, but the scope of the present disclosure is not limited thereto. For example, the subblock groups SBG_L2 to SBG_Lm may also be implemented similarly to the subblock group SBG_L1. More specifically, in some example embodiments, an address interval between subblocks included in the subblock groups SBG_L2 to SBG_Lm may be the head address interval INTV_head.

FIG 19 is a diagram illustrating an operation of a memory striding circuit according to some example embodiments. Referring to FIGS. 1 to 19, the processing circuit 110 may issue a head striding request REQ_STRD_head. The memory striding circuit 130 may sequentially access the plurality of subblocks SB included in the plurality of memory blocks BLK in response to the head striding request REQ_STRD_head.

Hereinafter, for simpler description, some example embodiments will be representatively described in which the transformer acceleration device 100 generates a (q(p+1)+1)-th token TKq(p+1)+1 based on the cache vectors (e.g., the key vectors KEY) stored in the first to q-th memory blocks BLK1 to BLKq. In this case, as described with reference to FIGS. 1 to 11 above, the calculation circuit 120 may require the cache vectors for the first to q(p+1)-th tokens TK1 to TKq(p+1). Accordingly, hereinafter, some example embodiments will be representatively described in which the memory striding circuit 130 reads the key vectors KEY for the first to q(p+1)-th tokens TK1 to TKq(p+1) from the first to q-th memory blocks BLK1 to BLKq.

The head striding request REQ_STRD_head may include a total number of blocks NUM_block, a memory block base address table MBBAT, a subblock offset OFST, and a reading size RS.

The total number of blocks NUM_block may indicate the total number of memory blocks BLK to be accessed by the memory striding circuit 130. For example, the total number of blocks NUM_block may indicate the number (e.g., 'q') of memory blocks BLK allocated to the memory device 160.

The memory block base address table MBBAT may include a memory block base addresses BASE of each of the plurality of memory blocks BLK. Since the configuration of the memory block base address table MBBAT is described with reference to FIG 14 above, a detailed description is omitted.

The subblock offset OFST may indicate a relative location, in the plurality of memory blocks BLK, of the subblocks SB to be accessed by the memory striding circuit 130. For example, the subblock offset OFST may indicate a difference between the subblock base addresses for the subblocks SB to be accessed by the memory striding circuit 130, and the plurality of memory block base addresses BASE.

The reading size RS may indicate the size of each of the subblocks SB to be accessed by the memory striding circuit 130. For example, the reading size RS may indicate a size of a memory region continuously read from the memory striding circuit 130 for one memory block BLK.

The memory striding circuit 130 may iteratively issue commands for reading subblocks SB corresponding to one decoder layer DL and one head H in response to the head striding request REQ_STRD_head. For example, the memory striding circuit 130 may iteratively issue commands for accessing subblocks SB corresponding to a specific decoder layer DL and a specific head H among the subblocks SB included in the plurality of memory blocks BLK in response to the head striding request REQ_STRD_head.

That is, the memory striding circuit 130 may issue a plurality of memory access commands CMD_MA for reading one subblock SB from the first memory block BLK1, and issue the plurality of memory access commands CMD_MA for reading one subblock SB from the second memory block BLK2. By such a scheme, the memory striding circuit 130 may also issue the plurality of memory access commands CMD_MA for reading one subblock SB from the q-th memory block BLKq.

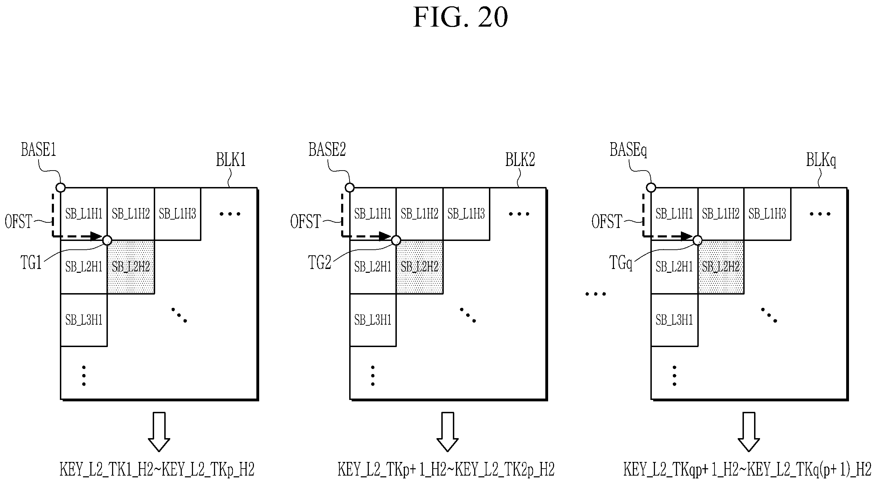

More specifically, in some example embodiments, the target address generation circuit 132 may generate a plurality of target addresses (hereinafter, referenced as "TG") by adding the subblock offset OFST to each of the plurality of memory block base addresses BASE. The command issue circuit 133 may read a memory region corresponding to the reading size RS from each of the plurality of target addresses TG An operation of the memory striding circuit 130 based on the subblock offset OFST and the reading size RS will be described in more detail with reference to FIG. 20 below.

In some example embodiments, the memory region corresponding to the reading size RS at which the target address TG is located may correspond to one subblock SB. That is, the memory striding circuit 130 may read cache vectors stored in one subblock corresponding to the target address TG. In this case, one subblock corresponding to the target address TG may also be referred to as a 'target subblock'. However, the scope of the present disclosure is not limited to the term.

FIG 20 is a diagram more specifically illustrating the operation of the memory striding circuit of FIG 19. Hereinafter, referring to FIGS. 1 to 20, some example embodiments will be representatively described in which the memory striding circuit 130 issues the memory access command CMD_MA for reading the subblock SB_L2H2 corresponding to the second decoder layer DL2 and the second head H2 from each of the first to q-th memory blocks BLK1 to BLKq in response to the head striding request REQ_STRD_head. However, the scope of the present disclosure is not limited thereto.

The target address generation circuit 132 may generate first to q-th target addresses TG1 to TGq by adding the subblock offset OFST to the first to q-th memory block base addresses BASE1 to BASEq, respectively. In this case, the first to q-th target addresses TG1 to TGq may be subblock base addresses for the subblock SB_L2H2 included in the first to q-th memory blocks BLK1 to BLKq, respectively.

In some example embodiments, the subblock offset OFST may correspond to an integer multiple of the layer address interval INTV_layer and an integer multiple of the head address interval INTV_head. For example, the subblock offset OFST corresponding to the subblock SB_L2H2 may be "0x01100".

In some example embodiments, the subblock offset OFST included in the striding request REQ_STRD may have a format of address size. For example, the subblock offset OFST included in the striding request REQ_STRD may be "0x01100". However, the scope of the present disclosure is not limited thereto, and the subblock offset OFST included in the striding request REQ_STRD may also have an ordered pair format of integers to be multiplied to the layer address interval INTV_layer and the head address interval INTV_head, respectively.

The command issue circuit 133 may issue a plurality of memory access commands CMD_MA for reading memory regions as large as the reading size RS from the first to q-th target addresses TG1 to TGq, respectively. For example, the command issue circuit 133 may issue the plurality of memory access commands CMD_MA for reading the memory region as large as the reading size RS from the first target address TG1, and issue the plurality of memory access commands CMD_MA for reading the memory region as large as the reading size RS from the second target address TG2. By such a scheme, the command issue circuit 133 may issue a plurality of memory access commands CMD_MA for reading the memory region as large as the reading size RS from the q-th target address TGq.

In response to the plurality of memory access commands CMD_MA provided from the command issue circuit 133, the memory device 160 may output key vectors KEY stored in subblocks SB_L2H2 of the first to q-th memory blocks BLK1 to BLKq (illustrated as a gray), respectively. For example, the memory device 160 may provide, to the calculation circuit 120, the plurality of key vectors KEY_L2_TK1_H2 to KEY_L2_TKp_H2 stored in the subblock SB_L2H2 included in the first memory block BLK1; the memory device 160 may provide, to the calculation circuit 120, the plurality of key vectors KEY_L2_TKp+1_H2 to KEY_L2_TK2p_H2 stored in the subblock SB_L2H2 included in the second memory block BLK2; and by such a scheme, the memory device 160 may provide, to the calculation circuit 120, the plurality of key vectors KEY_L2_TKqp+1_H2 to KEY_L2_TKq(p+1)_H2 stored in the subblock SB_L2H2 included in the q-th memory block BLKq. In this case, the calculation circuit 120 may perform an attention calculation ATC_L2_H2 for the second decoder layer DL2 and the second head H2 based on the provided key vectors KEY_L2_TK1_H2 to KEY_L2_TKq(p+1)_H2.

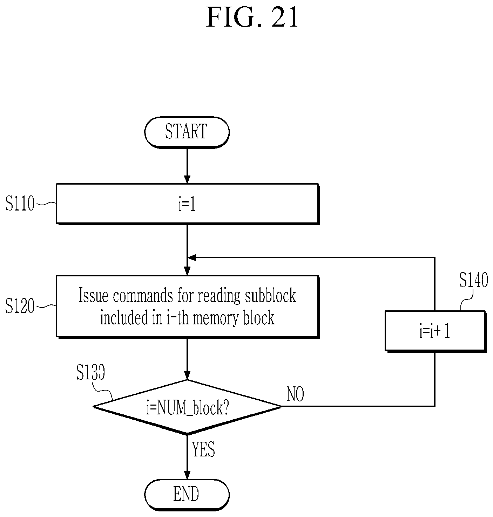

FIG 21 is a flowchart illustrating the operation of the memory striding circuit of FIG 19. Referring to FIGS. 1 to 21, in operation S110, a variable (i) may be set to 1 (e.g. may be initialized). The variable i is used for describing an iterative operation of the memory striding circuit 130, and does not limit the scope of the present disclosure.

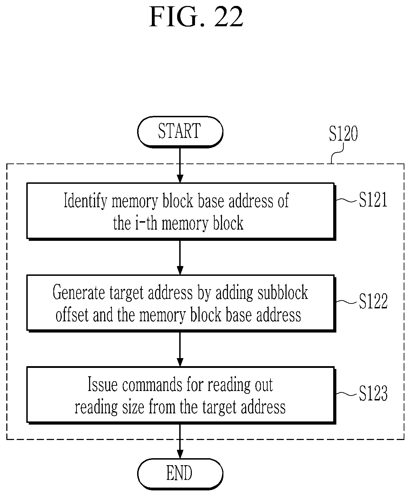

In operation S120, the memory striding circuit 130 may issue commands for reading a subblock included in an (i)-th memory block BLKi. For example, the memory striding circuit 130 may sequentially read a plurality of key vectors KEY stored in one subblock included in the (i)-th memory block BLKi by sequentially issuing the plurality of memory access commands CMD_MA. Operation S120 will be described in more detail with reference to FIG. 22 below.

In operation S130, the memory striding circuit 130 may determine whether the variable (i) is the same as the total number of memory blocks NUM_block. For example, the memory striding circuit 130 may determine whether one subblock SB is read from each of all memory blocks BLK.

In operation S130, when the variable (i) is different from (e.g. less than) the total number of memory blocks NUM_block, the memory striding circuit 130 may perform operation S140 below.

In operation S140, the memory striding circuit 130 may increase the variable (i) by '1'. Thereafter, the memory striding circuit 130 may iteratively perform operation S120 described above. By such a scheme, the memory striding circuit 130 may read one subblock SB from each of the plurality of memory blocks BLK. More specifically, in some example embodiments, the memory striding circuit 130 may read 'p' key vectors from each of the plurality of memory blocks BLK.

In operation S130, when the variable (i) is the same as the total number of memory blocks NUM_block, the operation of the memory striding circuit 130 may be terminated. In this case, the calculation circuit 120 may be able to perform the attention calculation ATC based on the read key vector KEY.

FIG 22 is a flowchart more specifically illustrating operation S120 of FIG 21. Referring to FIGS. 1 to 22, operation S120 may include operations S121 to S123 below.

In operation S121, the memory striding circuit 130 may identify the memory block base address BASE of the (i)-th memory block BLKi. For example, the target address generation circuit 132 may identify an (i)-th memory block base address BASEi from the memory block base address table MBBAT.

In operation S122, the memory striding circuit 130 may generate the target address TG by adding the memory block base address BASE and the subblock offset OFST. For example, the target address generation circuit 132 may generate an (i)-th target address TGi by adding the (i)-th memory block base address BASEi and the subblock offset OFST.

In operation S123, the memory striding circuit 130 may issue commands for reading the reading size RS from the target address TG. For example, the command issue circuit 133 may provide a plurality of memory access commands CMD_MA for reading the memory region as large as the reading size RS from the (i)-th target address TGi to the memory device 160 through the memory controller 150.

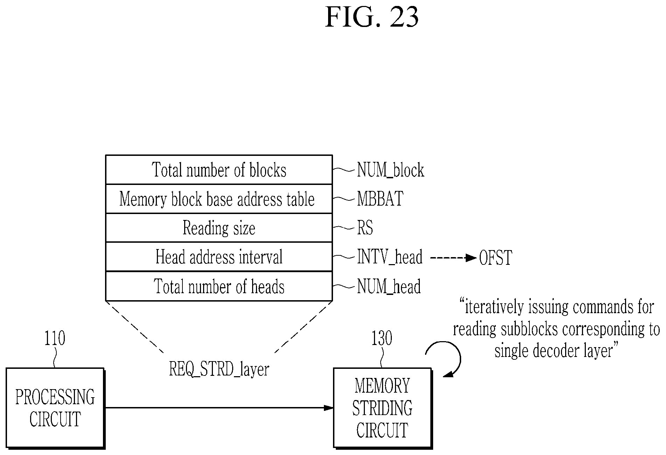

FIG 23 is a diagram illustrating an operation of a memory striding circuit according to some example embodiments. Referring to FIGS. 1 to 18 and 23, the processing circuit 110 may issue a layer striding request REQ_STRD_layer. In response to the layer striding request REQ_STRD_layer, the memory striding circuit 130 may sequentially access the plurality of subblocks SB respectively included in the plurality of memory blocks BLK.

The layer striding request REQ_STRD_layer may include a total number of blocks NUM_block, a memory block base address table MBBAT, a reading size RS, a head address interval INTV_head, and a total number of heads NUM_head.

The total number of blocks NUM_block, the memory block base address table MBBAT, and the reading size RS are similar to those described by referring to FIG 19 above, so a detailed description is omitted.

The head address interval INTV_head may indicate an address interval between the plurality of subblocks SB corresponding to one decoder layer DL and one memory block BLK.

The total number of heads NUM_head may indicate the number of subblocks SB which is needed to be accessed by the memory striding circuit 130 from each memory block BLK. For example, the total number of heads NUM_head may indicate the number of heads H (e.g., 'N') used for the multi-head attention calculation MHATC of the transformer TF executed by the transformer acceleration device 100.

The memory striding circuit 130 may iteratively issue commands for reading the plurality of subblocks SB corresponding to one decoder layer DL in response to the layer striding request REQ_STRD_layer. For example, the memory striding circuit 130 may sequentially issue commands for accessing the plurality of subblocks SB corresponding to a specific decoder layer DL among the subblocks SB included in the plurality of memory blocks BLK in response to the layer striding request REQ_STRD_layer.

That is, the memory striding circuit 130 may issue a plurality of memory access commands CMD_MA for reading one of the plurality of subblocks SB included in one subblock group SBG_L from the first to q-th memory blocks BLK1 to BLKq, respectively; and issue a plurality of memory access commands CMD_MA for reading the other one of the plurality of subblocks SB included in one subblock group SBG_L from the first to q-th memory blocks BLK1 to BLKq, respectively. By such a scheme, the memory striding circuit 130 may sequentially read the plurality of subblocks SB included in one subblock group SBG_L from the first to q-th memory blocks BLK1 to BLKq, respectively.

More specifically, in some example embodiments, the target address generation circuit 132 may calculate the subblock offset OFST by calculating an integer multiple of the head address interval INTV_head. The target address generation circuit 132 may generate the plurality of target addresses TG by adding the subblock offset OFST to the plurality of memory block base addresses BASE for the plurality of memory blocks BLK, respectively. In this case, the command issue circuit 133 may issue a plurality of memory access commands CMD_MA for reading the memory region corresponding to the reading size RS from the plurality of target addresses, respectively.

Thereafter, the target address generation circuit 132 may change the subblock offset OFST by adjusting the multiple of the head address interval INTV_head. In this case, the plurality of target addresses TG may be changed. The command issue circuit 133 may issue a plurality of memory access commands CMD_MA for reading the memory region corresponding to the reading size RS from the plurality of target addresses, respectively.

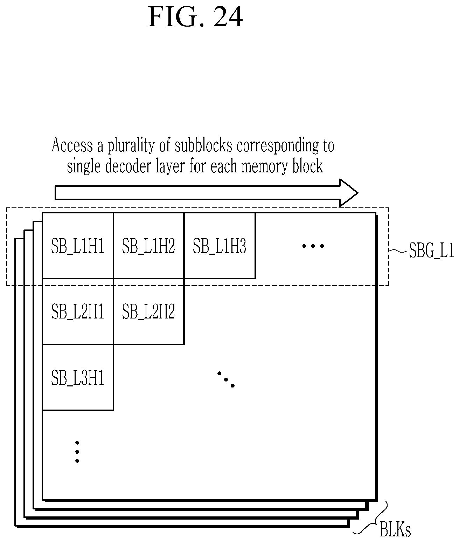

By such a scheme, the memory striding circuit 130 may read subblocks SB corresponding to the total number of heads NUM_head from each of the plurality of memory blocks BLK by sequentially changing the subblock offset OFST. An operation of the memory striding circuit 130 based on the head address interval INTV_head and the total number of heads NUM_head will be described in more detail with reference to FIG 24 below.

FIG 24 is a diagram more specifically illustrating the operation of the memory striding circuit of FIG 20. Hereinafter, referring to FIGS. 1 to 18, and 23 to 24, some example embodiments will be representatively described in which the memory striding circuit 130 issues the memory access command CMD_MA for reading the plurality of subblocks SB included in the subblock group SBG_L1 from each of the first to q-th memory blocks BLK1 to BLKq in response to the layer striding request REQ_STRD_layer. However, the scope of the present disclosure is not limited thereto.

First, the memory striding circuit 130 may access the subblocks SB_L1H1 included in the first to q-th memory blocks BLK1 to BLKq based on the first to q-th memory block base addresses BASE1 to BASEq, respectively. For example, the command issue circuit 133 may issue the plurality of memory access commands CMD_MA for reading the memory region as large as the reading size RS from the first to q-th memory block base addresses BASE1 to BASEq, respectively. In this case, the calculation circuit 120 may perform the attention calculation ATC_L1_H1 for the first decoder layer DL1 and the first head H1 based on the key vectors KEY_L1_TK1_H1 to KEY_L1_TKq(p+1)_H1 read from the memory device 160.

Thereafter, the memory striding circuit 130 may access, based on the first to q-th memory block base addresses BASE1 to BASEq and the head address interval INTV_head, the subblocks SB_L1H2 included in the first to q-th memory blocks BLK1 to BLKq, respectively. For example, the target address generation circuit 132 may generate the first to q-th target addresses TG1 to TGq by adding '1' multiple of the head address interval INTV_head (e.g., the subblock offset OFST) to the first to q-th memory block base addresses BASE1 to BASEq, respectively; and the command issue circuit 133 may issue the plurality of memory access commands CMD_MA for reading the memory region as large as the reading size RS from the first to q-th target addresses TG1 to TGq. In this case, the calculation circuit 120 may perform the attention calculation ATC_L1_H2 for the first decoder layer DL1 and the second head H2 based on the key vectors KEY_L1_TK1_H2 to KEY_L1_TKq(p+1)_H2 read from the memory device 160.

By such a scheme, the memory striding circuit 130 may sequentially access the subblocks SB_L1H3 to SB_L1HN included in the first to q-th memory blocks BLK1 to BLKq, respectively. For example, the target address generation circuit 132 may change the subblock offset OFST by sequentially increasing the size of the integer to be multiplied by the head address interval INTV_head; and the command issue circuit 133 may issue the plurality of memory access commands CMD_MA for reading the plurality of subblocks SB from the target address TG corresponding to the changed subblock offset OFST. In this case, the calculation circuit 120 may perform attention calculations ATC_L1_H1 to TC_L1_HN (e.g., multi head attention calculation MHATC) for all heads included in the first decoder layer DL1 based on the key vectors KEY read from the memory device 160

That is, the memory striding circuit 130 may traverse a plurality of subblocks SB corresponding to one decoder layer DL for each memory block BLK. A scheme in which the memory striding circuit 130 accesses one subblock (e.g., the subblock SB_L1H1) included in each of the first to q-th memory blocks BLK1 to BLKq is similar to the scheme described by referring to FIG 20, so a detailed description is omitted.

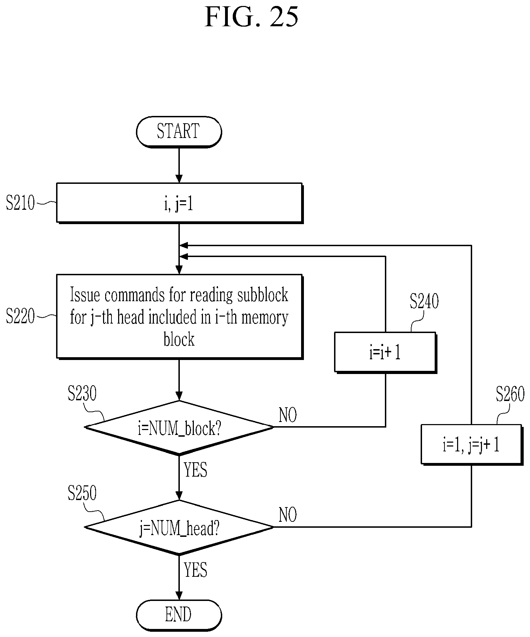

FIG 25 is a flowchart illustrating the operation of the memory striding circuit of FIG 24. Hereinafter, referring to FIGS. 1 to 18, and 23 to 25, an operation of the memory striding circuit 130 reading the key vectors KEY for performing the multi head attention calculation MHATC_L1 will be representatively described. However, the scope of the present disclosure is not limited thereto.

In operation S210, variables (i) and (j) may be set to '1' (e.g. may be initialized). The variables (i) and (j) are used for describing an iterative operation of the memory striding circuit 130, and do not limit the scope of the present disclosure.

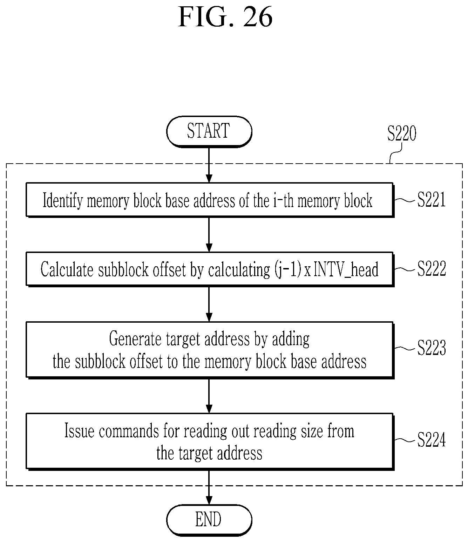

In operation S220, the memory striding circuit 130 may issue commands for reading one subblock for a (j)-th head Hj included in the (i)-th memory block BLKi. For example, the memory striding circuit 130 may sequentially read a plurality of key vectors KEY stored in the subblock SB_L1Hj included in the (i)-th memory block BLKi by sequentially issuing the plurality of memory access commands CMD_MA. Operation S220 will be described in more detail with reference to FIG 26 below.

In operation S230, the memory striding circuit 130 may determine whether the variable (i) is the same as the total number of memory blocks NUM_block. For example, the memory striding circuit 130 may determine whether the subblock SB_L1Hj has been read from each of all memory blocks BLK.

In operation S230, when the variable (i) is different from (e.g. less than) the total number of memory blocks NUM_block, the memory striding circuit 130 may perform operation S240 below.

In operation S240, the memory striding circuit 130 may increase the variable (i) by '1'. Thereafter, the memory striding circuit 130 may iteratively perform operation S220 described above. By such a scheme, the memory striding circuit 130 may read the subblock SB_L1Hj from each of the plurality of memory blocks BLK. In this case, the calculation circuit 120 may be able to perform the attention calculation ATC_L1_Hj for the (j)-th head Hj based on the read key vectors KEY.

In operation S230, when the variable (i) is the same as the total number of memory blocks NUM_block, the memory striding circuit 130 may perform operation S250 below.

In operation S250, the memory striding circuit 130 may determine whether the variable (j) is the same as the total number of heads NUM_head. For example, the memory striding circuit 130 may determine whether all subblocks SB are read from the subblock group SBG_L1 from each of all memory blocks BLK. In other words, the memory striding circuit 130 may determine whether subblocks SB of the same number as the total number of heads NUM_head has been read from all memory blocks BLK, respectively.

In operation S250, when the variable (j) is different from (e.g. less than) the total number of heads NUM_head, the memory striding circuit 130 may perform operation S260 below.

In operation S260, the memory striding circuit 130 may set the variable (i) to '1', and increase the variable (j) by '1'. Thereafter, the memory striding circuit 130 may iteratively perform operation S220 described above. By such a scheme, the memory striding circuit 130 may read all subblocks SB included in the subblock group SBG_L1 from each of the plurality of memory blocks BLK.

In operation S250, when the variable (j) is same from the total number of heads NUM_head, the operation of the memory striding circuit 130 may be terminated. In this case, the calculation circuit 120 may be able to perform the multi head attention calculation MHATC_L1 based on the read key vectors KEY.

FIG 26 is a flowchart more specifically illustrating operation S220 of FIG 25. Referring to FIGS. 1 to 18, and 23 to 26, operation S220 may include operations S221 to S224 below.

In operation S221, the memory striding circuit 130 may identify the memory block base address BASE of the (i)-th memory block BLKi. For example, the target address generation circuit 132 may identify an (i)-th memory block base address BASEi from the memory block base address table MBBAT.

In operation S222, the memory striding circuit 130 may calculate the subblock offset OFST by multiplying the head address interval INTV_head and (j-1). For example, the target address generation circuit 132 may calculate the subblock offset OFST by multiplying the head address interval INTV_head and (j-1).

In operation S223, the memory striding circuit 130 may generate the target address TG by adding the memory block base address BASE and the subblock offset OFST. In operation S224, the memory striding circuit 130 may issue the commands for reading the reading size RS from the target address TG. Operations S223 to S224 are similar to operations S122 to S123 described by referring to FIG 22 above, so a detailed description is omitted.

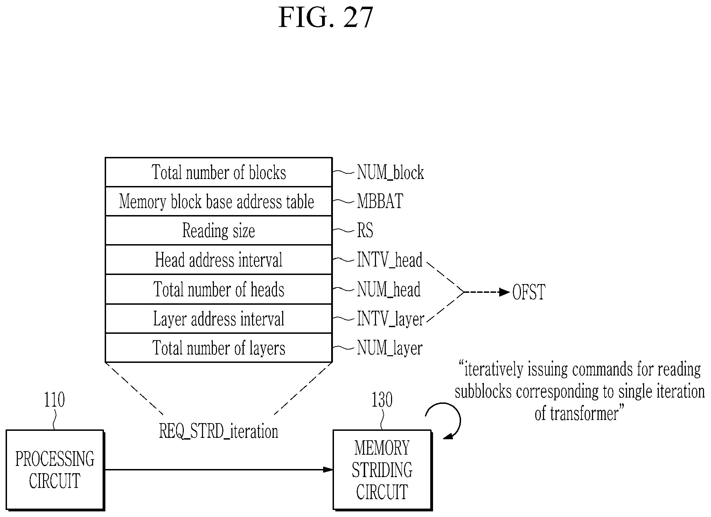

FIG 27 is a diagram illustrating an operation of a memory striding circuit according to some example embodiments. Referring to FIGS. 1 to 18 and 27, the processing circuit 110 may issue an iteration striding request REQ_STRD_iteration. The memory striding circuit 130 may sequentially access the plurality of subblocks SB included in the plurality of memory blocks BLK, respectively in response to the iteration striding request REQ_STRD_iteration.

The iteration striding request REQ_STRD_iteration may include a total number of blocks NUM_block, a memory block base address table MBBAT, a reading size RS, a head address interval INTV _head, a total number of heads NUM_head, a layer address interval INTV_layer, and a total number of layers NUM _layer.

The total number of blocks NUM_block, the memory block base address table MBBAT, the reading size RS, and the head address interval INTV_head are similar to those described by referring to FIG 23 above, so a detailed description is omitted.

The layer address interval INTV_layer may indicate an address interval between the plurality of subblocks SB corresponding to one head H and one memory block BLK.

The total number of heads NUM_head and the total number of layers NUM _layer may indicate the number of subblocks SB which the memory striding circuit 130 needs to access from each memory block BLK. For example, the total number of heads NUM_head may indicate the number of heads H (e.g., 'N') used for the multi-head attention calculation MHATC of the transformer TF executed by the transformer acceleration device 100, and the total number of layers NUM_layer may indicate the number of decoder layers DL (e.g., 'm') included in the transformer TF executed by the transformer acceleration device 100. The total number of subblocks SB to be accessed from each memory block BLK may therefore be (m x N).

The memory striding circuit 130 may iteratively issue commands for reading the plurality of subblocks SB corresponding to one iteration of the transformer TF, in response to the iteration striding request REQ_STRD_iteration. For example, the memory striding circuit 130 may sequentially issue commands for sequentially accessing all subblocks SB included in the plurality of memory blocks BLK, in response to the iteration striding request REQ_STRD_iteration.

More specifically, in some example embodiments, the target address generation circuit 132 may calculate the subblock offset OFST by adding an integer multiple of the head address interval INTV_head and an integer multiple of the layer address interval INTV_layer. The target address generation circuit 132 may generate the plurality of target addresses TG by adding the subblock offset OFST to the plurality of memory block base addresses BASE for the plurality of memory blocks BLK, respectively. In this case, the command issue circuit 133 may issue a plurality of memory access commands CMD_MA for reading the memory region corresponding to the reading size RS from the plurality of target addresses, respectively.

Thereafter, the target address generation circuit 132 may change the subblock offset OFST by adjusting multiples of the head address interval INTV_head and the layer address interval INTV_layer. In this case, the plurality of target addresses TG may be changed. The command issue circuit 133 may issue a plurality of memory access commands CMD_MA for reading the memory region corresponding to the reading size RS from the plurality of target addresses TG, respectively.

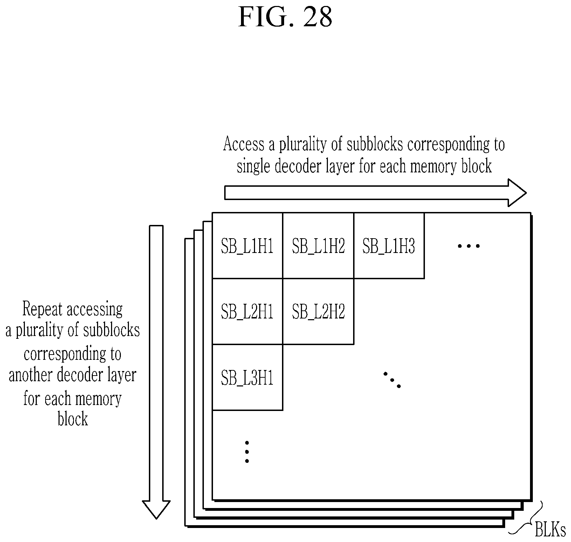

By such a scheme, the memory striding circuit 130 may read subblocks SB corresponding to a product of the total number of heads NUM_head and the total number of layers NUM_layer from each of the plurality of memory blocks BLK by sequentially changing the subblock offset OFST. An operation of the memory striding circuit 130 based on the head address interval INTV_head, the layer address interval INTV_layer, the total number of heads NUM_head, and the total number of layers NUM_layer will be described in more detail with reference to FIGS. 28 to 30 below.

FIG 28 is a diagram more specifically illustrating the operation of the memory striding circuit of FIG 27. Referring to FIGS. 1 to 18, and 27 to 28, in response to the iteration striding request REQ_STRD_iteration, the memory striding circuit 130 may issue the memory access command CMD_MA for reading all subblocks SB included in the first to q-th memory blocks BLK1 to BLKq, respectively.

First, the memory striding circuit 130 may access the subblock group SBG_L1 included in the first to q-th memory blocks BLK1 to BLKq, respectively. For example, the memory striding circuit 130 may sequentially read the subblocks SB_L1H1 to SB_L1HN from the first to q-th memory blocks BLK1 to BLKq, respectively. A scheme in which the memory striding circuit 130 reads the subblocks SB_L1H1 to SB_L1HN is similar to the scheme described by referring to FIG 24 above, so a detailed description is omitted. In this case, the calculation circuit 120 may be able to perform the multi head attention calculation MHATC_L1 based on the key vectors KEY read from the memory device 160.

Thereafter, the memory striding circuit 130 may access the subblock group SBG_L2 included in the first to q-th memory blocks BLK1 to BLKq, respectively. For example, the memory striding circuit 130 may sequentially read the subblocks SB_L2H1 to SB_L2HN from the first to q-th memory blocks BLK1 to BLKq, respectively. In this case, the calculation circuit 120 may be able to perform the multi head attention calculation MHATC_L2 based on the key vectors KEY read from the memory device 160.

By such a scheme, the memory striding circuit 130 may sequentially read all subblocks SB included in the first to q-th memory blocks BLK1 to BLKq, respectively. That is, the memory striding circuit 130 may sequentially read all subblocks SB included in the first to q-th memory blocks BLK1 to BLKq, respectively by a scheme of sequentially accessing the plurality of subblocks corresponding to one decoder layer DL, and then sequentially accessing a plurality of subblocks corresponding to the next decoder layer DL.

More specifically, in some example embodiments, the target address generation circuit 132 may change the subblock offset OFST by sequentially increasing the multiples of the head address interval INTV_head and the layer address interval INTV_layer. The command issue circuit 133 may issue a plurality of memory access commands CMD_MA for reading the plurality of subblocks SB from a target address TG corresponding to the changed subblock offset OFST. In this case, the transformer acceleration device 100 may be able to generate the output token TKout (e.g., (q(p+1)+1)-th token TKq(p+1)+1) by sequentially executing the first to m-th decoder layers DL1 to DLm included in the transformer TF based on the key vectors KEY read from the memory device 160.

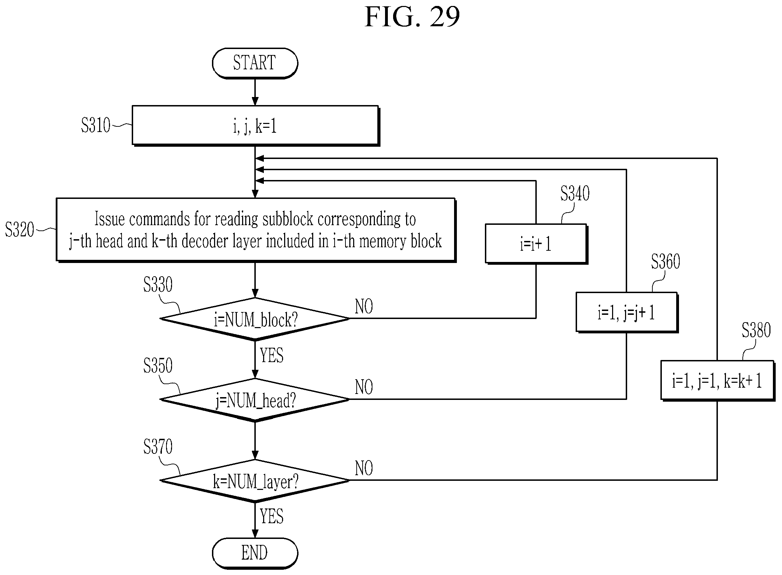

FIG 29 is a flowchart illustrating the operation of the memory striding circuit of FIG 27. Referring to FIGS. 1 to 18, and 27 to 29, in operation S310, variables (i), (j), and (k) may be set to '1' (e.g. may be initialized). The variables (i), (j), and (k) are used for describing an iterative operation of the memory striding circuit 130, and do not limit the scope of the present disclosure.

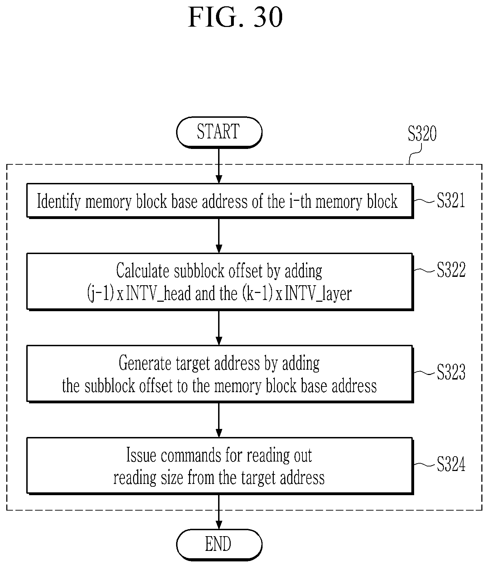

In operation S320, the memory striding circuit 130 may issue commands for reading one subblock SB_LkHj corresponding to a (k)-th decoder layer DLk and the (j)-th head Hj included in the (i)-th memory block BLKi. For example, the memory striding circuit 130 sequentially issues the plurality of memory access commands CMD_MA to sequentially read a plurality of key vectors KEY stored in the subblock SB_LkHj included in the (i)-th memory block BLKi. Operation S320 will be described in more detail with reference to FIG 30 below.

In operation S330, the memory striding circuit 130 may determine whether the variable (i) is the same as the total number of memory blocks NUM_block.

In operation S330, when the variable (i) is different from (e.g. less than) the total number of memory blocks NUM_block, the memory striding circuit 130 may perform operation S340 below. In operation S340, the memory striding circuit 130 may increase the variable (i) by '1'. Thereafter, the memory striding circuit 130 may iteratively perform operation S320 described above.

In operation S330, when the variable (i) is the same as the total number of memory blocks NUM_block, the memory striding circuit 130 may perform operation S350 below.

In operation S350, the memory striding circuit 130 may determine whether the variable (j) is the same as the total number of heads NUM_head.

In operation S350, when the variable (j) is different from (e.g. less than) the total number of heads NUM_head, the memory striding circuit 130 may perform operation S360 below.

In operation S360, the memory striding circuit 130 may set the variable (i) to '1', and increase the variable (j) by '1'. Thereafter, the memory striding circuit 130 may iteratively perform operation S320 described above.

The operations of the memory striding circuit 130 in operations S330 to S360 are similar to those in operations S230 to S260 described with reference to FIG 25 above, so a detailed description is omitted.

In operation S350, when the variable (j) is the same as the total number of heads NUM_head, the memory striding circuit 130 may perform operation S370 below.

In operation S370, the memory striding circuit 130 may determine whether the variable (k) is the same as the total number of layers NUM_layer.

In operation S370, when the variable (k) is different from (e.g. less than) the total number of layers NUM _layer, the memory striding circuit 130 may perform operation S380 below.

In operation S380, the memory striding circuit 130 may set the variables (i) and (j) to '1', and increase the variable (k) by '1'. Thereafter, the memory striding circuit 130 may iteratively perform operation S320 described above. By such a scheme, the memory striding circuit 130 may read all subblocks SB included in the plurality of memory blocks BLK.

In operation S370, when the variable (k) is the same as the total number of layers NUM_layer, the operation of the memory striding circuit 130 may be terminated. In this case, since the calculation circuit 120 may execute the multi head attention calculation MHATC included in all decoder layers DL of the transformer TF based on the key vectors KEY read from the memory device 160, the transformer acceleration device 100 may be able to generate the output token TKout.

FIG 30 is a flowchart more specifically illustrating operation S320 of FIG 29. Referring to FIGS. 1 to 18, and 27 to 30, operation S320 may include operations S321 to S324 below.

In operation S321, the memory striding circuit 130 may identify the memory block base address BASE of the (i)-th memory block BLKi. For example, the target address generation circuit 132 may identify an (i)-th memory block base address BASEi from the memory block base address table MBBAT.

In operation S322, the memory striding circuit 130 may calculate the subblock offset OFST by adding a product the head address interval INTV_head and (j-1), and a product of the layer address interval INTV_layer and (k-1). For example, the target address generation circuit 132 may calculate the subblock offset OFST by adding the product the head address interval INTV_head and (j-1), and the product of the layer address interval INTV _layer and (k-1).

In operation S323, the memory striding circuit 130 may generate the target address TG by adding the memory block base address BASE and the subblock offset OFST. In operation S324, the memory striding circuit 130 may issue commands for reading the reading size RS from the target address TG. Operations S323 to S324 are similar to operations S122 to S123 described by referring to FIG 22 above, so a detailed description is omitted.

Therefore, the improved devices and methods overcome the deficiencies of the conventional devices and methods of token based processing, in particular, related to attention calculation, while reducing resource consumption (e.g., processing capability, power, bandwidth), improving performance (e.g., speed or operations, reliability of operations), and resource allocation (e.g., latency).

When the terms "about" or "substantially" are used in this specification in connection with a numerical value, it is intended that the associated numerical value includes a manufacturing or operational tolerance (e.g., ±10 %) around the stated numerical value. Moreover, when the words "generally" and "substantially" are used in connection with geometric shapes, it is intended that precision of the geometric shape is not required but that latitude for the shape is within the scope of the disclosure. Further, regardless of whether numerical values or shapes are modified as "about" or "substantially," it will be understood that these values and shapes should be construed as including a manufacturing or operational tolerance (e.g., ±10 %) around the stated numerical values or shapes.

As described herein, any electronic devices and/or portions thereof according to any of the example embodiments may include, may be included in, and/or may be implemented by one or more instances of processing circuitry such as hardware including logic circuits; a hardware/software combination such as a processor executing software; or any combination thereof. For example, the processing circuitry more specifically may include, but is not limited to, a central processing unit (CPU), an arithmetic logic unit (ALU), a graphics processing unit (GPU), an application processor (AP), a digital signal processor (DSP), a microcomputer, a field programmable gate array (FPGA), and programmable logic unit, a microprocessor, application-specific integrated circuit (ASIC), a neural network processing unit (NPU), an Electronic Control Unit (ECU), an Image Signal Processor (ISP), and the like. In some example embodiments, the processing circuitry may include a non-transitory computer readable storage device (e.g., a memory), for example a DRAM device, storing a program of instructions, and a processor (e.g., CPU) configured to execute the program of instructions to implement the functionality and/or methods performed by some or all of any devices, systems, modules, units, controllers, circuits, architectures, and/or portions thereof according to any of the example embodiments, and/or any portions thereof.

The above-described contents are specific embodiments for carrying the present disclosure. The present disclosure will include not only the above-described embodiments, but also embodiments that can be simply designed or easy to change. In addition, the present disclosure will also include technologies that can be easily modified and implemented using the example embodiments. Therefore, the scope of the present disclosure should not be limited to the example embodiments and should be defined by the appended claims.

## Claims

1. A transformer acceleration device (100) comprising:
a memory device (160) including
a first memory block configured to store a first plurality of cache vectors for a first plurality of tokens, and
a second memory block configured to store a second plurality of cache vectors for a second plurality of tokens; and
a memory striding circuit configured to access the first and second memory blocks in response to a first striding request provided from an external device,
the memory striding circuit including
a memory block address management circuit (131) configured to
store a first memory block base address for the first memory block, and
store a second memory block base address for the second memory block;
a target address generation circuit (132) configured to
calculate, in response to the first striding request, a first target address included in the first memory block based on the first memory block base address and a first subblock offset, and
calculate, in response to the first striding request, a second target address included in the second memory block based on the second memory block base address and the first subblock offset; and
a command issue circuit (133) configured to
issue a first plurality of memory access commands for a first target subblock located in the first target address, and
issue a second plurality of memory access commands for a second target subblock located in the second target address.

2. The transformer acceleration device of claim 1, wherein:
a size of each of the first and second target subblocks is a first reading size.

3. The transformer acceleration device of claim 2, wherein:
the first striding request comprises the first memory block base address, the second memory block base address, the first subblock offset, and the first reading size.

4. The transformer acceleration device of any preceding claim, wherein:
the target address generation circuit is configured to, in response to the first striding request,
calculate a third target address included in the first memory block based on the first memory block base address and a second subblock offset; and
calculate a fourth target address included in the second memory block based on the second memory block base address and the second subblock offset, and
the command issue circuit is further configured to
issue a third plurality of memory access commands for a third target subblock located in the third target address, and
issue a fourth plurality of memory access commands for a fourth target subblock located in the fourth target address.

5. The transformer acceleration device of claim 4, when dependent on claim 2, wherein the first striding request includes the first memory block base address, the second memory block base address, a head address interval, a layer address interval, and the first reading size.

6. The transformer acceleration device of claim 5, wherein the target address generation circuit is further configured to calculate the first and second subblock offsets based on the head address interval and the layer address interval.

7. The transformer acceleration device of claim 6, wherein:
each of the first and second subblock offsets corresponds to a sum of an integer multiple of the head address interval and an integer multiple of the layer address interval.

8. The transformer acceleration device of any of claims 4-7, wherein the command issue circuit is configured to:
issue the first and second plurality of memory access commands during a first time period; and
issue the third and fourth plurality of memory access commands during a second time period after the first time period.

9. The transformer acceleration device of any preceding claim, wherein the memory device is configured to
store cache vectors included in the first target subblock among the plurality of first cache vectors in addresses adjacent to each other, and
store cache vectors included in the second target subblock among the plurality of second cache vectors in addresses adjacent to each other.

10. The transformer acceleration device of any preceding claim, wherein:
the first plurality of tokens and the second plurality of tokens are included in a first token sequence, and
the first plurality of tokens and the second plurality of tokens are continuous in the first token sequence.

11. The transformer acceleration device of claim 10, further comprising:
a calculation circuit configured to perform an attention calculation based on cache vectors included in the first target subblock among the first plurality of cache vectors and cache vectors included in the second target subblock among the second plurality of cache vectors.

12. The transformer acceleration device of any preceding claim, wherein:
the first plurality of memory access commands include a first plurality of active commands and a first plurality of read commands, and
the second plurality of memory access commands include a second plurality of active commands and a second plurality of read commands.

13. A transformer acceleration device (100) configured to execute a plurality of decoder layers including multi head attention calculations respectively performed based on a plurality of heads, the transformer acceleration device comprising:
a first memory block including a first subblock configured to store a first plurality of cache vectors generated for a first plurality of tokens based on a first head and a first decoder layer, the first head being one of the plurality of heads and the first decoder layer being one of the plurality of decoder layers;
a second memory block including a second subblock configured to store a second plurality of cache vectors generated for a second plurality of tokens based on the first head and the first decoder layer;
a memory striding circuit (130) configured to read the first plurality of cache vectors and the second plurality of cache vectors based on sequentially accessing the first subblock and the second subblock in response to a first striding request provided from an external device; and
a calculation circuit (120) configured to perform a first attention calculation for the first head and the first decoder layer based on the first plurality of cache vectors and the second plurality of cache vectors.

14. The transformer acceleration device of claim 13, wherein:
the first memory block further includes a third subblock configured to store a third plurality of cache vectors generated for the first plurality of tokens based on a second head and the first decoder layer, the second head being one of the plurality of heads;
the second memory block further includes a fourth subblock configured to store a fourth plurality of cache vectors generated for the second plurality of tokens based on the second head and the first decoder layer;
the memory striding circuit further configured to read the third plurality of cache vectors and the fourth plurality of cache vectors based on sequentially accessing the third subblock and the fourth subblock in response to the first striding request; and
the calculation circuit is further configured to perform a second attention calculation for the second head and the first decoder layer based on the third plurality of cache vectors and the fourth plurality of cache vectors.

15. The transformer acceleration device of claim 14, wherein:
the first memory block further includes a fifth subblock configured to store a fifth plurality of cache vectors generated for the first plurality of tokens based on the first head and a second decoder layer, the second decoder layer being one of the plurality of decoder layers;
the second memory block further includes a sixth subblock configured to store a sixth plurality of cache vectors generated for the second plurality of tokens based on the first head and the second decoder layer;
the memory striding circuit further configured to read the fifth plurality of cache vectors and the sixth plurality of cache vectors based on sequentially accessing the fifth subblock and the sixth subblock in response to the first striding request; and
the calculation circuit is further configured to perform a third attention calculation for the first head and the second decoder layer based on the fifth plurality of cache vectors and the sixth plurality of cache vectors.

## Patentansprüche

1. Transformatorbeschleunigungsvorrichtung (100) umfassend:
eine Speichervorrichtung (160), die Folgendes einschließt
einen ersten Speicherblock, der konfiguriert ist, eine erste Vielzahl von Cache-Vektoren für eine erste Vielzahl von Tokens zu speichern, und
einen zweiten Speicherblock, der konfiguriert ist, eine zweite Vielzahl von Cache-Vektoren für eine zweite Vielzahl von Tokens zu speichern; und
eine Speicher-Striding-Schaltung, die konfiguriert ist, als Reaktion auf eine von einer externen Vorrichtung bereitgestellten ersten Striding-Anforderung auf den ersten und zweiten Speicherblock zuzugreifen,
wobei die Speicher-Striding-Schaltung Folgendes einschließt
eine Speicherblockadressverwaltungsschaltung (131), die konfiguriert ist zum
Speichern einer ersten Speicherblock-Basisadresse für den ersten Speicherblock, und
Speichern einer zweiten Speicherblock-Basisadresse für den zweiten Speicherblock;
eine Zieladressenerzeugungsschaltung (132), die konfiguriert ist zum
Berechnen, als Reaktion auf die erste Striding-Anforderung, einer im ersten Speicherblock enthaltenen ersten Zieladresse basierend auf der ersten Speicherblock-Basisadresse und einem ersten Teilblock-Offset, und
Berechnen, als Reaktion auf die erste Striding-Anforderung, einer im zweiten Speicherblock enthaltenen zweiten Zieladresse basierend auf der zweiten Speicherblock-Basisadresse und dem ersten Teilblock-Offset; und
eine Befehlsausgabeschaltung (133), die konfiguriert ist zum
Ausgeben einer ersten Vielzahl von Speicherzugriffsbefehlen für einen ersten Zielteilblock, der sich an der ersten Zieladresse befindet, und
Ausgeben einer zweiten Vielzahl von Speicherzugriffsbefehlen für einen zweiten Zielteilblock, der sich an der zweiten Zieladresse befindet.

2. Transformatorbeschleunigungsvorrichtung nach Anspruch 1, wobei:
eine Größe des ersten und zweiten Zielteilblocks jeweils einer ersten Lesegröße entspricht.

3. Transformatorbeschleunigungsvorrichtung nach Anspruch 2, wobei:
die erste Striding-Anforderung die erste Speicherblocks-Basisadresse, die zweite Speicherblock-Basisadresse, den ersten Teilblock-Offset und die erste Lesegröße umfasst.

4. Transformatorbeschleunigungsvorrichtung nach einem vorstehenden Anspruch, wobei:
die Zieladressenerzeugungsschaltung konfiguriert ist zum, als Reaktion auf die erste Striding-Anforderung,
Berechnen einer dritten Zieladresse, die im ersten Speicherblock enthalten ist, basierend auf der ersten Speicherblock-Basisadresse und einem zweiten Teilblock-Offset; und
Berechnen einer vierten Zieladresse, die im zweiten Speicherblock enthalten ist, basierend auf der zweiten Speicherblock-Basisadresse und dem zweiten Teilblock-Offset, und
die Befehlsausgabeschaltschaltung weiter konfiguriert ist zum
Ausgeben einer dritten Vielzahl von Speicherzugriffsbefehlen für einen dritten Zielteilblock, der sich an der dritten Zieladresse befindet, und
Ausgeben einer vierten Vielzahl von Speicherzugriffsbefehlen für einen vierten Zielteilblock, der sich an der vierten Zieladresse befindet.

5. Transformatorbeschleunigungsvorrichtung nach Anspruch 4, wenn abhängig von Anspruch 2, wobei die erste Striding-Anforderung die erste Speicherblock-Basisadresse, die zweite Speicherblock-Basisadresse, ein Kopfadressintervall, ein Schichtadressintervall und die erste Lesegröße umfasst.

6. Transformatorbeschleunigungsvorrichtung nach Anspruch 5, wobei die Zieladressenerzeugungsschaltung weiter konfiguriert ist, den ersten und den zweiten Teilblock-Offset auf der Grundlage des Kopfadressintervalls und des Schichtadressintervalls zu berechnen.

7. Transformatorbeschleunigungsvorrichtung nach Anspruch 6, wobei:
jeder des ersten und des zweiten Teilblock-Offsets einer Summe aus einem ganzzahligen Vielfachen des Kopfadressintervalls und einem ganzzahligen Vielfachen des Schichtadressintervalls entspricht.

8. Transformatorbeschleunigungsvorrichtung nach einem der Ansprüche 4 bis 7, wobei die Befehlsausgabeschaltung konfiguriert ist zum
Ausgeben der ersten und der zweiten Vielzahl von Speicherzugriffsbefehlen während eines ersten Zeitraums; und
Ausgeben der dritten und der vierten Vielzahl von Speicherzugriffsbefehlen während eines zweiten Zeitraums nach dem ersten Zeitraum.

9. Transformatorbeschleunigungsvorrichtung nach einem vorstehenden Anspruch, wobei die Speichervorrichtung konfiguriert ist zum
Speichern von Cache-Vektoren, die im ersten Zielteilblock enthalten sind, unter der Vielzahl ersten Cache-Vektoren in zueinander benachbarten Adressen, und
Speichern von Cache-Vektoren, die im zweiten Ziel-Teilblock enthalten sind, unter der Vielzahl von zweiten Cache-Vektoren in zueinander benachbarten Adressen.

10. Transformatorbeschleunigungsvorrichtung nach einem vorstehenden Anspruch, wobei:
die erste Vielzahl von Tokens und die zweite Vielzahl von Tokens in einer ersten Tokensequenz enthalten sind, und
die erste Vielzahl von Tokens und die zweite Vielzahl von Tokens in der ersten Tokensequenz zusammenhängend sind.

11. Transformatorbeschleunigungsvorrichtung nach Anspruch 10, weiter umfassend:
eine Berechnungsschaltung, die konfiguriert ist, auf der Grundlage von Cache-Vektoren, die im ersten Zielteilblock unter der ersten Vielzahl von Cache-Vektoren enthalten sind, und von Cache-Vektoren, die im zweiten Zielteilblock unter der zweiten Vielzahl von Cache-Vektoren enthalten sind, eine Aufmerksamkeitsberechnung durchzuführen.

12. Transformatorbeschleunigungsvorrichtung nach einem vorstehenden Anspruch, wobei:
die erste Vielzahl von Speicherzugriffsbefehlen eine erste Vielzahl von aktiven Befehlen und eine erste Vielzahl von Lesebefehlen einschließt, und
die zweite Vielzahl von Speicherzugriffsbefehlen eine zweite Vielzahl von aktiven Befehlen und eine zweite Vielzahl von Lesebefehlen einschließt.

13. Transformatorbeschleunigungsvorrichtung (100), die konfiguriert ist, eine Vielzahl von Decoderschichten auszuführen, einschließlich Mehrkopf-Aufmerksamkeitsberechnungen, die jeweils auf der Grundlage einer Vielzahl von Köpfen durchgeführt werden, wobei die Transformatorbeschleunigungsvorrichtung Folgendes umfasst:
einen ersten Speicherblock, der einen ersten Teilblock einschließt, der konfiguriert ist, eine erste Vielzahl von Cache-Vektoren zu speichern, die für eine erste Vielzahl von Tokens auf der Grundlage eines ersten Kopfes und einer ersten Decoderschicht erzeugt wurden, wobei der erste Kopf einer der Vielzahl von Köpfen ist und die erste Decoderschicht eine der Vielzahl von Decoderschichten ist;
einen zweiten Speicherblock, der einen zweiten Teilblock einschließt, der konfiguriert ist, eine zweite Vielzahl von Cache-Vektoren zu speichern, die für eine zweite Vielzahl von Tokens auf der Grundlage des ersten Kopfes und der ersten Decoderschicht erzeugt wurden;
eine Speicher-Striding-Schaltung (130), die konfiguriert ist, die erste Vielzahl von Cache-Vektoren zu lesen, und
die zweite Vielzahl von Cache-Vektoren, die auf dem sequenziellen Zugriff auf den ersten Teilblock und den zweiten Teilblock als Reaktion auf eine von einer externen Vorrichtung bereitgestellten ersten Striding-Anforderung basieren; und
eine Berechnungsschaltung (120), die konfiguriert ist, eine erste Aufmerksamkeitsberechnung für den ersten Kopf und die erste Decoderschicht auf der Grundlage der ersten Vielzahl von Cache-Vektoren und der zweiten Vielzahl von Cache-Vektoren durchzuführen.

14. Transformatorbeschleunigungsvorrichtung nach Anspruch 13, wobei:
der erste Speicherblock weiter einen dritten Teilblock einschließt, der konfiguriert ist, eine dritte Vielzahl von Cache-Vektoren zu speichern, die für die erste Vielzahl von Tokens auf der Grundlage eines zweiten Kopfes und der ersten Decoderschicht erzeugt wurden, wobei der zweite Kopf einer der Vielzahl von Köpfen ist;
der zweite Speicherblock weiter einen vierten Teilblock einschließt, der konfiguriert ist, eine vierte Vielzahl von Cache-Vektoren zu speichern, die für die zweite Vielzahl von Tokens auf der Grundlage des zweiten Kopfes und der ersten Decoderschicht erzeugt wurden;
die Speicher-Striding-Schaltung weiter konfiguriert ist, die dritte Vielzahl von Cache-Vektoren und die vierte Vielzahl von Cache-Vektoren zu lesen, indem sie als Reaktion auf die erste Striding-Anforderung sequenziell auf den dritten Teilblock und vierten Teilblock zugreift; und
die Berechnungsschaltung weiter konfiguriert, eine zweite Aufmerksamkeitsberechnung für den zweiten Kopf und die erste Decoderschicht auf der Grundlage der dritten Vielzahl von Cache-Vektoren und der vierten Vielzahl von Cache-Vektoren durchzuführen.

15. Transformatorbeschleunigungsvorrichtung nach Anspruch 14, wobei:
der erste Speicherblock weiter einen fünften Teilblock einschließt, der konfiguriert ist, eine fünfte Vielzahl von Cache-Vektoren zu speichern, die für die erste Vielzahl von Tokens auf der Grundlage des ersten Kopfes und einer zweiten Decoderschicht erzeugt wurden, wobei die zweite Decoderschicht eine der Vielzahl von Decoderschichten ist;
der zweite Speicherblock weiter einen sechsten Teilblock einschließt, der konfiguriert ist, eine sechste Vielzahl von Cache-Vektoren zu speichern, die für die zweite Vielzahl von Tokens auf der Grundlage des ersten Kopfes und der zweiten Decoderschicht erzeugt wurden;
die Speicher-Striding-Schaltung weiter konfiguriert, die fünfte Vielzahl von Cache-Vektoren und die sechste Vielzahl von Cache-Vektoren zu lesen, indem sie als Reaktion auf die erste Striding-Anforderung sequenziell auf den fünften Teilblock und den sechsten Teilblock zugreift; und
die Berechnungsschaltung weiter konfiguriert, eine dritte Aufmerksamkeitsberechnung für den ersten Kopf und die zweite Decoderschicht auf der Grundlage der fünften Vielzahl von Cache-Vektoren und der sechsten Vielzahl von Cache-Vektoren durchzuführen.

## Revendications

1. Dispositif d'accélération de Transformer (100) comprenant :
un dispositif de mémoire (160) incluant
un premier bloc de mémoire configuré pour stocker une première pluralité de vecteurs de cache pour une première pluralité de jetons, et
un second bloc de mémoire configuré pour stocker une deuxième pluralité de vecteurs de cache pour une seconde pluralité de jetons ; et
un circuit de balayage de mémoire configuré pour accéder aux premier et second blocs de mémoire en réponse à une première requête de balayage fournie par un dispositif externe,
le circuit de balayage de mémoire incluant
un circuit de gestion d'adresses de blocs de mémoire (131) configuré pour
stocker une adresse de base de premier bloc de mémoire pour le premier bloc de mémoire, et
stocker une adresse de base de second bloc de mémoire pour le second bloc de mémoire ;
un circuit de génération d'adresses cibles (132) configuré pour
calculer, en réponse à la première requête de balayage, une première adresse cible incluse dans le premier bloc de mémoire sur la base de l'adresse de base de premier bloc de mémoire et d'un premier décalage de sous-bloc, et
calculer, en réponse à la première requête de balayage, une deuxième adresse cible incluse dans le second bloc de mémoire sur la base de l'adresse de base de second bloc de mémoire et du premier décalage de sous-bloc ; et
un circuit d'émission de commandes (133) configuré pour
émettre une première pluralité de commandes d'accès à la mémoire pour un premier sous-bloc cible situé à la première adresse cible, et
émettre une deuxième pluralité de commandes d'accès à la mémoire pour un deuxième sous-bloc cible situé à la deuxième adresse cible.

2. Dispositif d'accélération de Transformer selon la revendication 1, dans lequel :
la taille de chacun des premier et deuxième sous-blocs cibles est une première taille de lecture.

3. Dispositif d'accélération de Transformer selon la revendication 2, dans lequel :
la première requête de balayage comprend l'adresse de base de premier bloc de mémoire, l'adresse de base de second bloc de mémoire, le premier décalage de sous-bloc et la première taille de lecture.

4. Dispositif d'accélération de Transformer selon une quelconque revendication précédente, dans lequel :
le circuit de génération d'adresses cibles est configuré pour, en réponse à la première requête de balayage,
calculer une troisième adresse cible incluse dans le premier bloc de mémoire sur la base de l'adresse de base de premier bloc de mémoire et d'un second décalage de sous-bloc ; et
calculer une quatrième adresse cible incluse dans le second bloc de mémoire sur la base de l'adresse de base de second bloc de mémoire et du second décalage de sous-bloc, et
le circuit d'émission de commandes est en outre configuré pour
émettre une troisième pluralité de commandes d'accès à la mémoire pour un troisième sous-bloc cible situé à la troisième adresse cible, et
émettre une quatrième pluralité de commandes d'accès à la mémoire pour un quatrième sous-bloc cible situé à la quatrième adresse cible.

5. Dispositif d'accélération de Transformer selon la revendication 4, lorsqu'elle dépend de la revendication 2, dans lequel la première requête de balayage inclut l'adresse de base de premier bloc de mémoire, l'adresse de base de second bloc de mémoire, un intervalle d'adresses de tête, un intervalle d'adresses de couche et la première taille de lecture.

6. Dispositif d'accélération de Transformer selon la revendication 5, dans lequel le circuit de génération d'adresses cibles est en outre configuré pour calculer les premier et second décalages de sous-bloc sur la base de l'intervalle d'adresses de tête et de l'intervalle d'adresses de couche.

7. Dispositif d'accélération de Transformer selon la revendication 6, dans lequel :
chacun des premier et second décalages de sous-bloc correspond à la somme d'un multiple entier de l'intervalle d'adresses de tête et d'un multiple entier de l'intervalle d'adresses de couche.

8. Dispositif d'accélération de Transformer selon l'une quelconque des revendications 4-7, dans lequel le circuit d'émission de commandes est configuré pour :
émettre les première et deuxième pluralités de commandes d'accès à la mémoire au cours d'une première période ; et
émettre les troisième et quatrième pluralités de commandes d'accès à la mémoire au cours d'une second période après la première période.

9. Dispositif d'accélération de Transformer selon une quelconque revendication précédente, dans lequel le dispositif de mémoire est configuré pour
stocker des vecteurs de cache inclus dans le premier sous-bloc cible parmi la pluralité de premiers vecteurs de cache dans des adresses adjacentes les unes aux autres, et
stocker des vecteurs de cache inclus dans le deuxième sous-bloc cible parmi la pluralité de deuxièmes vecteurs de cache dans des adresses adjacentes les unes aux autres.

10. Dispositif d'accélération de Transformer selon une quelconque revendication précédente, dans lequel :
la première pluralité de jetons et la seconde pluralité de jetons sont incluses dans une première séquence de jetons, et
la première pluralité de jetons et la seconde pluralité de jetons sont continues dans la première séquence de jetons.

11. Dispositif d'accélération de Transformer selon la revendication 10, comprenant en outre :
un circuit de calcul configuré pour effectuer un calcul d'attention sur la base de vecteurs de cache inclus dans le premier sous-bloc cible parmi la première pluralité de vecteurs de cache et de vecteurs de cache inclus dans le deuxième sous-bloc cible parmi la deuxième pluralité de vecteurs de cache.

12. Dispositif d'accélération de Transformer selon une quelconque revendication précédente, dans lequel :
la première pluralité de commandes d'accès à la mémoire inclut une première pluralité de commandes actives et une première pluralité de commandes de lecture, et
la deuxième pluralité de commandes d'accès à la mémoire inclut une seconde pluralité de commandes actives et une seconde pluralité de commandes de lecture.

13. Dispositif d'accélération de Transformer (100) configuré pour exécuter une pluralité de couches de décodeur incluant des calculs d'attention multi-têtes respectivement effectués sur la base d'une pluralité de têtes, le dispositif d'accélération de Transformer comprenant :
un premier bloc de mémoire incluant un premier sous-bloc configuré pour stocker une première pluralité de vecteurs de cache générés pour une première pluralité de jetons sur la base d'une première tête et d'une première couche de décodeur, la première tête étant l'une de la pluralité de têtes et la première couche de décodeur étant l'une de la pluralité de couches de décodeur ;
un second bloc de mémoire incluant un deuxième sous-bloc configuré pour stocker une deuxième pluralité de vecteurs de cache générés pour une seconde pluralité de jetons sur la base de la première tête et de la première couche de décodeur ;
un circuit de balayage de mémoire (130) configuré pour lire la première pluralité de vecteurs de cache et
la deuxième pluralité de vecteurs de cache sur la base de l'accès séquentiel au premier sous-bloc et au deuxième sous-bloc en réponse à une première requête de balayage fournie par un dispositif externe ; et
un circuit de calcul (120) configuré pour effectuer un premier calcul d'attention pour la première tête et la première couche de décodeur sur la base de la première pluralité de vecteurs de cache et de la deuxième pluralité de vecteurs de cache.

14. Dispositif d'accélération de Transformer selon la revendication 13, dans lequel :
le premier bloc de mémoire inclut en outre un troisième sous-bloc configuré pour stocker une troisième pluralité de vecteurs de cache générés pour la première pluralité de jetons sur la base d'une seconde tête et de la première couche de décodeur, la seconde tête étant l'une de la pluralité de têtes ;
le second bloc de mémoire inclut en outre un quatrième sous-bloc configuré pour stocker une quatrième pluralité de vecteurs de cache générés pour la seconde pluralité de jetons sur la base de la seconde tête et de la première couche de décodeur ;
le circuit de balayage de mémoire est en outre configuré pour lire la troisième pluralité de vecteurs de cache et la quatrième pluralité de vecteurs de cache sur la base de l'accès séquentiel au troisième sous-bloc et au quatrième sous-bloc en réponse à la première requête de balayage ; et
le circuit de calcul est en outre configuré pour effectuer un deuxième calcul d'attention pour la seconde tête et la première couche de décodeur sur la base de la troisième pluralité de vecteurs de cache et de la quatrième pluralité de vecteurs de cache.

15. Dispositif d'accélération de Transformer selon la revendication 14, dans lequel :
le premier bloc de mémoire inclut en outre un cinquième sous-bloc configuré pour stocker une cinquième pluralité de vecteurs de cache générés pour la première pluralité de jetons sur la base de la première tête et d'une seconde couche de décodeur, la seconde couche de décodeur étant l'une de la pluralité de couches de décodeur ;
le second bloc de mémoire inclut en outre un sixième sous-bloc configuré pour stocker une sixième pluralité de vecteurs de cache générés pour la seconde pluralité de jetons sur la base de la première tête et de la seconde couche de décodeur ;
le circuit de balayage de mémoire est en outre configuré pour lire la cinquième pluralité de vecteurs de cache et la sixième pluralité de vecteurs de cache sur la base de l'accès séquentiel au cinquième sous-bloc et au sixième sous-bloc en réponse à la première requête de balayage ; et
le circuit de calcul est en outre configuré pour effectuer un troisième calcul d'attention pour la première tête et la seconde couche de décodeur sur la base de la cinquième pluralité de vecteurs de cache et de la sixième pluralité de vecteurs de cache.
